# EUROPÄISCHE PATENTSCHRIFT

(11) **EP 0 954 231 B1**
(45) Veröffentlichungstag und Bekanntmachung des Hinweises auf die Patenterteilung: **21.11.2001**
(21) Anmeldenummer: 98904065.4
(22) Anmeldetag: 14.01.1998
(51) Int. Cl.: A46B 7/04, A46B 9/04

(54) **ZAHNREINIGUNGSGERÄT MIT EINEM HANDGRIFF**
TEETH-CLEANING DEVICE WITH HANDLE
APPAREIL DE NETTOYAGE DES DENTS A MANCHE

(30) Priorität: 21.01.1997 DE 19701891
(43) Veröffentlichungstag der Anmeldung: 10.11.1999
(73) Patentinhaber: F.A. Rueb Holding GmbH, 79677 Schönau (DE)
(72) Erfinder: RUEB, Fritz, Alfons, D-79677 Schönau (DE); RUEB, Fritz, Walter, D-79677 Schönau (DE)
(74) Vertreter: Patent- und Rechtsanwaltssozietät, Maucher, Börjes & Kollegen
(86) Internationale Anmeldenummer: EP9800173
(87) Internationale Veröffentlichungsnummer: WO9831254

(56) Entgegenhaltungen:
- EP-A- 0 311 937
- EP-A- 0 537 663
- EP-A- 0 550 818
- CA-A- 1 247 311
- CH-A- 672 723
- DE-A- 4 223 196
- US-A- 4 780 923

## Beschreibung

Die Erfindung betrifft ein Zahnreinigungsgerät mit einem Handgriff und mit wenigstens einem Interdental-Behandlungsteil in Form zum Beispiel eines Pinsels und/oder einer Bürste und/oder eines Zahnstochers, welches Behandlungsteil an dem Handgriff quer zu dessen Längserstreckung vorstehend angeordnet, lösbar und austauschbar befestigt und in Gebrauchsstellung mittels einer in Sperrstellung festlegbaren Sperre verriegelt ist, wobei das Behandlungsteil oder eine zu ihm gehörige Halterung in Gebrauchsstellung eine quer zu dem Handgriff verlaufende Lochung durchsetzt und das Behandlungsteil oder seine Halterung bei geöffneter Sperre, wenn diese den Lochungsquerschnitt freigibt, in die Lochung einsteckbar ist und wobei ferner die Sperre in Schließstellung die Lochung überdeckt und das Entnehmen des Behandlungsteiles verhindert.

Ein derartiges Zahnreinigungsgerät ist aus der EP-0 311 937 B1 bekannt. Als Behandlungsteil dient dabei eine zylindrische oder konische Bürste, bei welcher die Borsten von einem gedrillten Draht gehalten sind, der als Halter in einer Lochung des Handgriffes mit einer Sperre verankert werden kann. Als Sperre dient dabei ein quer zur Mittelachse des Behandlungsteiles und koaxial zum Ende des Handgriffes verschiebbarer Schieber, der eine stirnseitige Öffnung hat, mit der eine Halteplatte des Behandlungsteiles in Schließstellung übergriffen werden kann. Der Schieber ist dabei als Hülse ausgebildet und kann zum Auswechseln des Behandlungsteiles in Richtung des Handgriffes von dessen Ende weg verschoben werden. Die Verschiebebewegung zum Öffnen dieser Sperre ist also entgegen der Richtung orientiert, mit der der Handgriff und das Behandlungsteil in den Mund und dabei möglicherweise in den Bereich der Backenzähne eingeführt werden, so daß die Gefahr besteht, daß die Hülse bei dieser Einführbewegung ungewollt in Offenstellung verschoben werden könnte. Bei der häufig nicht einfachen Reinigung des Interdentalbereiches, also des Bereiches zwischen zwei Zähnen, könnte also die Sperre geöffnet und das Behandlungsteil aus seiner Halterung gelöst werden. Dies könnte sogar zu Verletzungen in der Mundhöhle führen.

Aus der US-A-4 780 923 ist ein Zahnreinigungsgerät der eingangs genannten Art bekannt, bei welchem als Sperre eine schwenkbare Klappe dient, deren Schwenkachse am äußersten Ende des Handgriffes stirnseitig derart angeordnet ist, daß die Lochung für die Halterung des Behandlungsteiles demgegenüber mehr zur Mitte des Handgriffes hin orientiert ist. Die Schwenkachse ist dabei quer oder rechtwinklig zur Erstreckung des Handgriffes und zur Erstreckung der Mittelachse des Behandlungsteiles orientiert. Diese klappenförmige Sperre soll dabei in Schließstellung aufgrund ihrer Querschnittgestaltung gegenüber dem Ende des Handgriffes verrastet werden, wobei seitlich vorstehende Flansche zum Erfassen für die Öffnungs- und Schließbewegung vorgesehen sind.

Auch dabei besteht die Gefahr, daß beispielsweise beim Abrutschen während der Reinigung des Interdentalbereiches insbesondere von Backenzähnen diese Betätigungsflansche sich so gegenüber Zahn-Rändern oder dergleichen abstützen, daß die Sperre ungewollt geöffnet werden könnte. Darüber hinaus ist die Herstellung der zueinander passenden und miteinander zu verrastenden Teile und deren Verbindung mit einer quer verlaufenden Achse relativ aufwendig. Außerdem wird beim Schließen dieser schwenkbaren Sperre der Haltedraht des bürstenförmigen Behandlungsteiles in derselben Richtung umgebogen, in welcher diese Sperre zum Verschließen geklappt wird, so daß die Sperre auch noch unter der Spannung dieser Halterung des Behandlungsteiles steht, welche Spannung in Öffnungsrichtung wirkt.

Aus der EP-A-0 537 663 A1 ist ebenfalls ein derartiges Zahnreinigungsgerät bekannt, bei welchem als Behandlungsteil eine etwa zylindrische Bürste mit einem zentralen Haltedraht vorgesehen ist, wobei der Haltedraht als Halter in einer Lochung des Handgriffes verankert wird. In Ausgangsstellung durchsetzt dieser Draht eine Lochung und ragt auf der der Bürste abgewandten Seite über den Halter hinaus. Als Sperre dient ein quer zu diesem Draht koaxial zum Ende des Handgriffes verschiebbarer Schieber, der zunächst mit einem Anschlag einen größeren Abstand zu der Stirnseite des Handgriffes hat und dann auf diesen Handgriff aufgeschoben wird. Sein rückwärtiger Teil beaufschlagt dabei den überstehenden Teil des Haltedrahtes und biegt diesen beim Aufschieben um. Zwar ist dadurch die Schieberichtung etwa in Übereinstimmung mit der Belastung beim Einführen des Zahnreinigungsgerätes in den Mund, jedoch läßt sich nicht ausschließen, daß bei Putzbewegungen innerhalb des Mundes die Sperre wieder ungewollt in Offenstellung zurückverschoben wird.

Aus DE-A-42 23 196 A1 ist ein Bürstenhalter für eine Zahnbürste bekannt, bei welchem ebenfalls eine Sperre vorhanden ist, die beim Verriegelungsvorgang senkrecht zur Längsachse des Behandlungsteiles bewegt wird. Sie ist dabei an einem Ausschnitt schwenkbar angeordnet, in welchen ein Haltedraht für die Borsten einsteckbar ist. Im Bereich dieses Ausschnittes wird dieser Haltedraht durch die Sperre bei deren Verschwenkung in Schließstellung verformt und axial festgelegt. Abgesehen von der aufwendigen Ausbildung des eigentlichen Bürstenhalters und der Lagerung dieser Sperre steht sie mit einem Betätigungsende gegenüber dem eigentlichen Bürstenhalter vor, um auch wieder geöffnet werden zu können. Somit ist ein ungewolltes Öffnen nicht ausgeschlossen.

Es besteht deshalb die Aufgabe, ein Zahnreinigungsgerät der eingangs genannten Art zu schaffen, welches einfach herstellbar ist und eine Sperre aufweist, bei welcher die Gefahr einer ungewollten Öffnung insbesondere im Mund und während der Betätigung weitestgehend ausgeschlossen ist.

Zur Lösung dieser Aufgabe ist das eingangs genannte Zahnreinigungsgerät dadurch gekennzeichnet, daß die Sperre leistenförmig ausgebildet und in einer Aussparung oder an einer Querschnittsverkleinerung des Handgriffes derart angeordnet ist, daß sie in Sperr- und Gebrauchsstellung bezüglich des Querschnittes bündiger oder vorsprungfreier Bestandteil des Handgriffes ist, und daß diese Sperre eine mit Abstand zu der Lochung für das Behandlungsteil an dem Handgriff angeordnete Drehlagerung hat, deren Achse parallel zur Längsachse des Behandlungsteiles verläuft.

Die Sperre ist somit in Längsrichtung des Handgriffes orientiert und festgelegt, wenn eine Zahnreinigung durchgeführt werden soll und muß zum Öffnen um die parallel zu dem Behandlungsteil verlaufende Achse und somit quer zu dem Handgriff verdreht werden, was eine bei üblichen Behandlungsbewegungen praktisch nicht auftretende Verdrehung oder Verschwenkung bedeutet, so daß ungewollte Öffnungen der Sperre während des Reinigungsvorganges praktisch ausgeschlossen sind, zumal die Sperre in Sperrstellung festgelegt ist. Da die Sperre dabei vorsprungfrei bzw. bündig mit dem Handgriff verläuft und angeordnet ist, sind auch keine Ansatzstellen vorhanden, die zu einer ungewollten Öffnungsbewegung während des Reinigungsvorganges führen oder beitragen könnten.

Eine separat herstellbare Hülse als Sperre wird ebenso vermieden wie eine den Endbereich des Handgriffes teilweise über- und umgreifende klappenförmige Sperre, die zu ihrer Betätigung seitlich abstehende Flansche oder Vorsprünge benötigt. Dennoch kann die erfindungsgemäße Sperre gut erfaßt und verdreht werden, weil praktisch ihr gesamter Längserstreckungsbereich zum Anfassen und Angreifen zur Verfügung steht und die gesamte Sperre ähnlich wie ein Knebelgriff für ihre Betätigung verdreht oder verschwenkt werden kann.

Die Aussparung des Handgriffes zur Aufnahme der leistenförmigen Sperre kann auf der dem vorstehenden Behandlungsteil abgewandten Seite des Handgriffes angeordnet und zumindest bereichsweise abgeflacht sein, wobei diese Abflachung bis über die Lochung reichen kann und die dieser Abflachung zugesandte Seite der leistenförmigen Sperre ebenfalls abgeflacht und eben ausgebildet ist. Dadurch kann die Sperre möglichst dicht über dieser Oberfläche der Aussparung oder auf dieser Oberfläche entlanggleiten, wenn sie zum Öffnen oder Schließen verdreht wird. Entsprend gut ist auch die Sperrwirkung gegenüber dem Behandlungsteil, weil dieses in Sperrstellung dann entsprechend sicher fixiert und festgelegt wird.

Besonders günstig ist es, wenn die Sperre in Sperrstellung einen Teil oder Bereich des Behandlungsteiles klemmend beaufschlagt. Dies führt nicht nur zur Festlegung der Sperre selbst, sondern auch zur besseren Verankerung des Behandlungsteiles, so daß dieses auch die bei der Behandlung auftretenden Kräfte gut aufnehmen und übertragen kann.

Die der Lochung und dem Behandlungsteil abgewandte Außenseite der Sperre kann in Höhe und Breite in Gebrauchsstellung mit der Oberfläche des übrigen Handgriffes fluchten und die Sperre kann in ihrer Sperrstellung in der Aussparung den Querschnitt des Handgriffes ergänzen. Dies stellt eine besonders günstige Ausgestaltung der mit dem Handgriff bündigen und vorsprungfreien leisten- oder knebelförmigen Sperre dar, die dann auch bei dem Reinigungsvorgang im Mund keinerlei Beeinträchtigung für den Benutzer bedeutet und ihrerseits keine Angriffsstellen für ungewollte Verstellbewegungen gibt.

Für eine gute Überdeckung der den Behandlungsteil enthaltenden Lochung und somit eine sichere Verriegelung des Behandlungsteiles ist es vorteilhaft, wenn die Lochung zur Aufnahme und Halterung des Behandlungsteiles dem Ende des Handgriffes näher als die Drehlagerung der Sperre angeordnet ist. Von der Drehlagerung aus kann dann die Sperre gut zum Ende des Handgriffes hin über die Lochung ragen und von dort aus zum Auswechseln des Behandlungsteiles zur Seite geschwenkt werden.

Besonders günstig ist es, wenn die Sperre zwei von ihrer Drehlagerung nach entgegengesetzten Richtungen ausgehende Arme oder Abschnitte aufweist, deren einer in Sperrstellung die Lochung übergreift oder überdeckt und deren anderer von der Drehlagerung ausgehend in Richtung des Handgriffes bis zu einem die Ausnehmung begrenzenden Absatz verläuft. Dabei können diese beiden Abschnitte etwa gleich lang sein, so daß der Benutzer eine bequem zu betätigende Sperre vorfindet, die er ähnlich einem Drehgriff oder Knebelgriff etwa um ihre Mitte verdrehen kann, um sie in ihre verschiedenen Endstellungen zu bringen. Darüber hinaus ergeben sich auf diese Weise bessere und mehr Möglichkeiten, die Sperre insbesondere in Sperrstellung zu klemmen und/oder zu verrasten, um ungewollte Öffnungsbewegungen zu verhindern. Der Absatz zwischen Handgriff und Aussparung kann etwa rechtwinklig zur Längserstreckung des Handgriffes angeordnet und in Querrichtung inbesondere konkav gekrümmt sein und die in Sperrstellung diesem Absatz zugewandte Stirnseite der Sperre kann in entsprechender Weise konvex gekrümmt sein, wobei der Krümmungsradius dem Abstand dieser Stirnseite von der Achse der Drehlagerung entspricht. Somit wird die Sperre bei ihrer Verschwenkung oder Verdrehung in die Sperrstellung während des letzten Teiles ihrer Bewegung nicht nur von der Drehlagerung, sondern auch an der sich dabei ergebenden Berührung zwischen ihrer Stirnseite und dem Absatz der Aussparung geführt. Darüber hinaus erhält die Sperre so in Längserstreckungsrichtung des Absatzes eine zusätzliche Abstützung, wenn sich Absatz und Stirnseite in Sperrstellung berühren, gegebenenfalls klemmend berühren, um die Sperrstellung besser zu sichern.

Es kann an wenigstens einer der Stirnseiten der Sperre - ggf. auch an ihrer Unterseite - eine Einrichtung zum Fixieren der Sperrstellung durch Reib- oder Klemmkraft und/oder Formschluß und/oder Verrastung vorgesehen sein. Somit ergeben sich mehrere einzeln oder auch gemeinsam anwendbare Möglichkeiten, die Sperre in ihrer Sperrstellung zu fixieren. Dies wird vor allem durch die erfindungsgemäße Form und Bewegungsrichtung der Sperre innerhalb einer Aussparung ermöglicht.

Eine zweckmäßige Ausgestaltung der Fixierung der Sperre kann darin bestehen, daß an der dem Absatz entgegengesetzten Stirnseite der Sperre ein Vorsprung zum klemmenden und/oder rastenden Festlegen der Sperre in Sperrstellung angeordnet ist. Dieser Vorsprung könnte zum Beispiel am Handgriff selbst als weiterer, gegenüber der Aussparung wieder hochstehender Absatz ausgestaltet sein.

Noch günstiger ist es jedoch, wenn der Vorsprung an der Stirnseite der Sperre selbst vorgesehen ist und den Rand des stirnseitigen Endes des Handgriffes in Sperrstellung über-und/oder umgreift, insbesondere reibschlüssig oder rastend an dem Ende des Handgriffes angreift. Die Sperre kann in Sperrstellung auf diese Weise an ihren beiden Stirnseiten in axialer Richtung in Berührung und Wirkverbindung mit dem Handgriff gelangen, was nicht nur ihre Drehlagerung entlastet, sondern auch zu einer entsprechend sicheren Halterung und Festlegung dieser Sperrstellung führt, zumal die Sperre in dieser Position gegenüber dem übrigen Handgriff bündig und vorsprungfrei in die Aussparung eingepaßt ist und somit auch praktisch keinen Angriffspunkt für bei der Zahnreinigung auf sie eventuell ausgeübte Kräfte bietet.

Auch an der dem Absatz zugewandten Stirnseite der Sperre und/oder an diesem Absatz können Haltemittel zum lösbaren Festlegen der Sperrstellung, insbesondere eine Verklemmung und/oder eine Verrastung vorgesehen sein. Dies kann zur Ergänzung der am entgegengesetzten Ende der Sperre vorgesehenen Fixierung oder auch stattdessen zu deren Festlegung in Gebrauchs- und Sperrstellung dienen.

Als Drehlagerung der Sperre an dem Handgriff kann an dem einen Teil ein pilzförmiger Vorsprung und an dem Gegenstück eine diesen pilzförmigen Vorsprung rastend und den Pilzkopf mit einem Kragen oder Vorsprung hintergreifende Ausnehmung vorgesehen sein, wobei der pilzförmige Vorsprung insbesondere an der Sperre und die Ausnehmung an dem Handgriff vorgesehen sein können, was jedoch auch umgekehrt vorgesehen sein kann. Es ist jedoch für die Herstellung und Montage günstiger, wenn der pilzförmige Vorsprung an der Sperre angeordnet ist und in eine entsprechende Ausnehmung an der Aussparung des Handgriffes eingedrückt werden kann.

Bei einem Zahnreinigungsgerät mit einer auswechselbar vorgesehenen Bürste, deren Borsten von einem mittleren, insbesondere gedrillten Draht gehalten sind, ist es in Ausgestaltung der Erfindung besonders zweckmäßig, wenn der Haltedraht die Lochung des Handgriffes im Bereich der Aussparung durchsetzt und über die Lochung in den Bereich der drehbaren Sperre übersteht und durch die Verdrehung der Sperre in ihre Schließstellung gegenüber der Lochung umbiegbar ist. Der Überstand des Drahtes ist dabei selbstverständlich so zu wählen, daß er in dieser umgebogenen Position nicht über die Außenkontur des Handgriffes und der Sperre übersteht. Die Verdrehung bewirkt also in diesem Falle gleichzeitig die formschlüssige Fixierung des Behandlungsteiles, wobei der umzubiegende Draht auch zusätzlich die Sperre in ihrer Schließstellung verklemmt oder mindestens zu deren Fixierung beiträgt, die außerdem durch weitere Mittel und Maßnahmen gemäß den vorbeschriebenen Ausgestaltungsmöglichkeiten erfolgen kann.

Dabei ist es für eine gute Halterung der Bürste und ihres Haltedrahtes vorteilhaft, wenn die Aussparung an ihrer der Sperre zugewandten Seite eine quer zur Längserstreckung des Handgriffes - insbesondere mit der Achse des Drehlagers als Krümmungszentrum gekrümmt - verlaufende Nut zur Aufnahme des durch die Sperre umgebogenen Haltedrahtes aufweist und wenn die Lochung zum Durchstecken des Haltedrahtes in diese Nut, insbesondere am Nutengrund, mündet. Die Sperre kann auf diese Weise mit ihrer Unterseite an der Oberseite der Aussparung des Handgriffes anliegen und geführt sein, so daß die Drehlagerung ihre für eine gute Verdrehbarkeit beste Position behält und dennoch kann der Haltedraht umgebogen und in umgebogener Lage gehalten werden, weil er dabei in der genannten Nut untergebracht wird, deren Querschnitt gleich oder größer als der Querschnitt des Haltedrahtes ist und diesen somit in sich aufnehmen kann. Die Spannung des Haltedrahtes führt dabei dennoch zu einer gewissen Reibschlüssigkeit zwischen Haltedraht und Sperre.

Bei einem Zahnreinigungsgerät der erfindungsgemäßen Art mit einem pinselförmigen Behandlungsteil, das von einem aus etwa parallelen Borsten bestehenden Borstenbündel ist, welches an seinem dem Behandlungsende entgegengesetzten Ende insbesondere verschweißt und/oder mit einer Halteplatte verbunden ist, kann die radiale Ausdehnung der Halteplatte den Querschnitt des Borstenbündels übertreffen und das Borstenbündel kann durch eine die Halteplatte formschlüssig aufnehmende Lochung eingesteckt sein, wobei die Lochung an ihrem dem Austritt der Borsten abgewandten Eintrittsbereich eine der Form und Größe der Halteplatte entsprechende Erweiterung hat und die Halteplatte etwa bündig mit dem Lochungsrand ist, wenn sich dieses Behandlungsteil in Gebrauchsstellung befindet. Die Sperre kann in Schließstellung an der Oberfläche der Halteplatte insbesondere mit Druck anliegen oder nahezu anliegen. Somit wird dieses als Borstenbündel oder Pinsel ausgebildete Behandlungsteil aufgrund seiner radialen Erweiterung im Bereich der Halteplatte an einem Durchfallen durch die Lochung und durch die in Schließstellung gebrachte Sperre an einem entgegengesetzten Herausdrücken gehindert, also sicher festgelegt. Dabei kann die Sperre zusätzlich mit der den Borsten abgewandten Oberseite der Halteplatte im Sinne einer Verklemmung zusammenwirken, jedoch kann die Sperre auch in den vorher schon beschriebenen Weisen in ihrer Sperrstellung fixiert werden.

Die Halteplatte kann eine etwa ovale, kreisförmige oder mehreckige Umrißform oder Außenkontur und einen halbkugelförmigen, plattenförmigen und insbesondere sich in Richtung der Borsten verjüngenden Längsschnitt haben, der in die entsprechend geformte Erweiterung der Haltelochung des Handgriffes paßt und in axialer Richtung darin gehalten ist. Somit hat diese Halteplatte eine Doppelfunktion, indem sie einerseits die Borsten zusammenhält und andererseits zur Fixierung des Behandlungsteiles in der Lochung und zu dem Formschluß darin beiträgt.

Eine Ausgestaltung des Zahnreinigungsgerätes von ganz erheblicher und vorteilhafter Bedeutung kann darin bestehen, daß der Handgriff an wenigstens zwei Stellen, insbesondere an den einander entgegengesetzten Endbereichen jeweils einen Behandlungsteil, insbesondere dabei zwei unterschiedliche Behandlungsteile, aufweist, die jeweils von einer drehbaren Sperre gemäß der Erfindung in Gebrauchsstellung lösbar und auswechselbar gehalten sind. Somit hat der Benutzer mehrere Behandlungsmöglichkeiten, ohne das Behandlungsteil auswechseln zu müssen. Dennoch kann er jedes Behandlungsteil beispielsweise nach dessen Verbrauch und Verschleiß auswechseln.

Günstig ist es dabei, wenn die beiden Behandlungsteile an den entgegengesetzten Enden des Stieles oder Handgriffes nach einander entgegengesetzten Seiten gegenüber dem Stiel oder Handgriff quer zu dessen Längserstreckung vorstehen. Somit behindert ein nicht benutztes Behandlungsteil den Benutzer nicht, weil es beim Einführen eines Behandlungsteiles in den Mund dann praktisch nach der entgegengesetzten Seite, also von dem Benutzer weg gerichtet ist.

Besonders günstig ist es dabei, wenn an dem einen Ende ein von einem Borstenbündel gebildeter, insbesondere angespitzter Pinsel und an dem anderen Ende eine Bürste mit einem Haltedraht und davon abstehenden Borsten vorgesehen sind. Somit können dem Benutzer die Vorteile dieser beiden Behandlungsteile gleichzeitig zugänglich gemacht werden.

Eine ganz besondere Ausgestaltung oder Weiterbildung der Erfindung von insofern eigener schutzwürdiger Bedeutung kann darin bestehen, daß die - an dem Handgriff quer zu dessen Längserstreckung verlaufende - Lochung für wenigstens ein Behandlungsteil ihrer Länge nach derart geteilt ist, daß ein Teil der Innenwandung der Lochung an dem Handgriff und der sie in Gebrauchsstellung ergänzende Teil der Innenwandung an der Sperre oder an einem etwa parallel zur Drehachse der Sperre verlaufenden Schenkel dieser Sperre angeordnet ist und daß die Lochung bei geöffneter Sperre für das Einfügen des Behandlungsteiles oder eine zu ihm gehörige Halterung geteilt und freigegeben ist und nach dem Verschwenken oder Verdrehen der Sperre in Schließstellung das Behandlungsteil oder die Halterung eines Behandlungsteiles umschließt.

Bei geöffneter Sperre ist also die Lochung geteilt und von der Seite her zugänglich, so daß das Behandlungsteil oder seine Halterung nicht der Länge nach in diese Lochung eingesteckt werden muß, sondern gewissermaßen etwa parallel zu sich selbst von der Seite her in die Lochung beziehungsweise deren offenen Teil eingesetzt werden kann, wonach dann die Sperre in Schließstellung verschwenkt und dadurch die Lochung ergänzt und zur Seite hin abgeschlossen werden kann, um das Behandlungsteil oder eine Halterung eines Behandlungsteiles zu umschließen und festzulegen. Damit kann das Einfügen eines Behandlungsteiles oder sein Auswechseln erheblich erleichtert und gleichzeitig verbessert werden, weil eine noch bessere Anpassung der Lochung an die Halterung oder das Behandlungsteil durch die bessere Zugänglichkeit ermöglicht wird. Darüber hinaus erhält die Sperre eine zusätzliche Funktion dadurch, daß sie selbst einen Teil der Lochung aufweist, welche durch ihre Sperrstellung geschlossen wird.

Eine besonders vorteilhafte Weiterbildung kann dabei darin bestehen, daß die geteilt Lochung eine Erweiterung oder eine insbesondere in Richtung der Drehlagerung der Sperre verlaufende, durch die Sperre verschließbare Nut zur Aufnahme eines in diesem Bereich umgebogenen Haltedrahtes aufweist. In die - wie die Lochung geteilte - Erweiterung kann also ein Kopf eines Behandlungsteiles eingefügt und durch das Verschließen der Sperre fixiert werden, während in die Nut oder Rille ein Haltedraht eingeschoben werden kann, der dann umgebogen wird, damit sein weiterer Verlauf mit der von ihm getragenen Bürste wiederum quer zum Handgriff steht. Die Sperre schließt dann wiederum zumindest den quer zu dem Handgriff verlaufenden Teil der Lochung ab. Die Nut oder Rille kann dabei eine etwa in der Längsmittelebene des Handgriffes liegende Bohrung oder Öffnung sein, die unabhängig von der Sperre ist, die aber auch durch die Sperre abgeschlossen werden könnte.

Vor allem eine solche Sperre, die einen Teil der Lochung aufweist und mit diesem Teil in Schließstellung die Lochung ergänzt, ermöglicht dabei eine die Stabilität erhöhende Ausgestaltung dahingehend, daß diese Sperre zwei etwa leistenförmige, parallel zueinander verlaufende Teile aufweist, die an parallelen Ablfachungen des Handgriffes drehbar gelagert sind, daß der einen Teil der Lochung aufweisende Bereich oder Schenkel der Sperre die beiden leistenförmigen Teile verbindet und daß die gesamte Sperre insgesamt einen etwa U-förmigen Längsschnitt aufweist, wobei die beiden leistenförmigen Teile die U-Schenkel bilden und die Drehlagerung aufweisen. Gegenüber einer nur durch einen leistenförmigen Teil gebildeten Sperre ergibt sich also eine solche Sperre, die vor allem in Schließstellung das entsprechende Halteende des Handgriffes beidseits umfaßt und dadurch eine wesentlich stabilere Halterung, Lagerung und größere Sperrwirkung entfalten kann. Es ergibt sich also eine einfache Aufnahme für das Behandlungsteil oder eine Halterung eines Behandlungsteiles und dennoch ein überaus sicherer Halt dafür.

Ausgestaltungen der Sperre, insbesondere derjenigen Sperre, welche einen Teil der Lochung für das Behandlungsteil oder dessen Halterung aufweist, sind Gegenstand der Ansprüche 24 bis 29.

Anspruch 24 gibt dabei eine besonders günstige räumliche Anordnung der Lochung relativ zur Stirnseite des Handgriffes an, die es erlaubt, das Behandlungsteil an der Stirnseite des Handgriffes einzusetzen und dann mit der Sperre zu verriegeln.

Anspruch 25 enthält eine günstige Anordnung der Trennung der Lochung, wenn damit ein als Pinsel ausgebildetes Behandlungsteil erfaßt werden soll. Anspruch 26 hingegen gibt eine zweckmäßige Anordnung der Lochung und ihrer Teilung für den Fall an, daß eine Bürste mit ihrem Haltedraht einzusetzen und zu verriegeln ist.

In den Ansprüchen 27 bis 29 sind Möglichkeiten und Ausgestaltungen der Festlegung der Schließstellung der Sperre angegeben. Insbesondere wird durch diese Maßnahmen eine definierte Schließstellung vorgegeben, wobei der für die Sperre vorgesehene Anschlag verhindert, daß die teilweise in der Sperre befindliche Lochung in Gebrauchsstellung einen ungewollt großen oder ungewollt kleinen Querschnitt erhält. Mit Hilfe des Anschlages wird der vorgegebene Querschnitt der geteilten Lochung sichergestellt.

Anspruch 29 enthält eine der Möglichkeiten, wie die Sperre in ihrer Schließstellung festgelegt werden kann.

Insgesamt ergibt sich vor allem bei Kombination einzelner oder mehrerer der vorbeschriebenen Merkmale und Maßnahmen ein Zahnreinigungsgerät, an welchem Bürste und/oder Pinsel ohne aufwendige Hülse festsitzen und dennoch austauschbar am Handgriff festgehalten werden, ohne daß der Handgriff durch aufwendige Mechanismen unverhältnismäßig verteuert wird. Gleichzeitig ergibt sich eine gute Handhabung und eine einfache und sichere Betätigung und Festlegung der leistenförmigen oder U-förmigen, wie ein Knebelgriff oder Schwenkhaken betätigbaren Sperre, insbesondere im Zusammenwirken mit einem Rastmechanismus, der ein Verdrehen oder Verschwenken dieser Sperre während des Putzvorganges verhindert. Da die Breite der Sperre im Bereich ihrer Lagerung der Breite des Handgriffes entspricht und die Sperre auch hinsichtlich ihrer sonstigen Querschnitts- und Längsschnittkontur an eine sie aufnehmende Aussparung des Handgriffes angepaßt ist und somit damit fluchtet und bündig ist, sind Verletzungen im Mund während der Behandlung durch überstehende Betätigungsvorsprünge oder dergleichen vermieden. Solche Vorsprünge zum Betätigen der Sperre sind aber entbehrlich, weil die Sperre aufgrund ihrer Leistenform und ihrer Erstreckung quer zu ihrer Drehlagerung als Drehgriff für ihre Betätigung dienen kann.

Nachstehend sind Ausführungsbeispiele der Erfindung anhand der Zeichnung näher beschrieben. Es zeigt in zum Teil schematisierter Darstellung:
- Fig.1: eine teilweise im Längsschnitt gehaltene Seitenansicht eines erfindungsgemäßen Zahnreinigungsgerätes, welches an seinen beiden Endbereichen jeweils nach entgegengesetzten Seiten etwa rechtwinklig abstehende Behandlungsteile aufweist, die in ihrer Gebrauchsstellung von einer Sperre verriegelt gehalten werden,
- Fig.2: einen Längsschnitt durch das Ende des Handgriffes des erfindungsgemäßen Zahnreinigungsgerätes in Seitenansicht mit der Aussparung für eine drehbare Sperre, jedoch ohne diese Sperre,
- Fig.3: eine Draufsicht der Aussparung im Endbereich des Handgriffes des Zahnreinigungsgerätes gemäß Fig.2,
- Fig.4: eine Draufsicht einer leistenförmigen Sperre, die in ihrer Breite der Breite der Aussparung an dem Endbereich des Handgriffes entspricht und in die Aussparung paßt,
- Fig.5: eine Seitenansicht der Sperre gemäß Fig.4 mit einem an ihr angeordneten pilzförmigen Vorsprung zum Zusammenwirken mit einer entsprechenden, in Fig.2 erkennbaren Lageröffnung, womit eine Drehlagerung für die Sperre gebildet ist,
- Fig.6: einen Querschnitt des Handgriffes im Bereich einer Lochung, in die ein Haltedraht eines als Bürste ausgebildeten Interdental-Behandlungsteiles eingesteckt ist, wobei die Sperre in Offenstellung verdreht ist und der Haltedraht in den Bewegungsbereich dieser Sperre übersteht,
- Fig.7: eine der Fig.6 entsprechende Darstellung mit einem Querschnitt auch durch die nunmehr in Schließstellung verdrehte Sperre, wobei durch die Schließbewegung der Überstand des Haltedrahtes umgebogen und in eine neben der Durchtrittslochung für den Haltedraht sich erstreckende Nut verformt ist,
- Fig.8: eine der Fig.2 entsprechende Darstellung des Endbereiches des Handgriffes eines erfindungsgemäßen Zahnreinigungsgerätes mit einer größeren Lochung für ein abgewandeltes Behandlungsteil,
- Fig.9: eine der Fig.3 entsprechende Draufsicht der Aussparung im Endbereich des Handgriffes,
- Fig.10: eine Draufsicht des Endbereiches gemäß Fig.9 mit einer an der Aussparung durch die Drehlagerung verrasteten Sperre in Offenstellung,
- Fig.11: eine der Fig.8 entsprechende Darstellung nach dem Einstecken eines als Pinsel ausgebildeten Behandlungsteiles, das eine Vielzahl paralleler Borsten an einer sie fixierenden Halteplatte aufweist,
- Fig.12: mehrere gegenüber Fig.11 abgewandelte Ausführungsbeispiele eines etwa pinselförmigen Behandlungsteiles mit einer Halteplatte für die Borste und zum Fixieren in dem Handgriff, wobei Seitenansichten dieser Behandlungsteile und teilweise Draufsichten auf die Halteplatten gemeinsam in Fig.12 dargestellt sind,
- Fig.13: eine teilweise im Längsschnitt gehaltene Seitenansicht eines erfindungsgemäßen Zahnreinigungsgerätes analog dem in Fig.1, wobei gegenüber Fig.1 abgewandelte Sperren vorgesehen sind,
- Fig.14: eine Ansicht eines der Enden des Zahnreinigungsgerätes gemäß Fig.13, wobei ein Behandlungsteil noch nicht eingesetzt, aber die Sperre geschlossen ist,
- Fig.15: eine der Fig.14 entsprechende Darstellung, wobei die Sperre in Offenstellung verschwenkt ist und ein als Bürste mit Haltedraht ausgebildetes Behandlungsteil vor dem Einfügen in eine horizontale Lochung und Umbiegung in eine geteilte, teilweise in der Sperre befindliche Lochung dargestellt ist,
- Fig.16: einen Längsschnitt durch das in Fig.14 und 15 dargestellte Ende eines Zahnreinigungsgerätes nach dem Einfügen des in Fig.15 dargestellten Behandlungsteiles und nach dem Verschwenken der Sperre in Schließstellung, wobei erkennbar ist, daß die Sperre zwei parallele leistenförmige Teile mit einer fluchtenden Drehlagerung aufweist und eine quer zu dem Handgriff des Zahnreinigungsgerätes verlaufende Lochung teilweise im Handgriff und teilweise in der Sperre und dabei einem quer zu den leistenförmigen Teilen verlaufenden Schenkel angeordnet ist,
- Fig.17: eine der Fig.14 entsprechende Draufsicht des anderen Endes des in Fig.13 dargestellten Behandlungsteiles, wobei die Sperre geschlossen ist, ohne daß ein Behandlungsteil eingefügt wurde,
- Fig.18: eine der Fig.17 entsprechende Ansicht eines Endes des Zahnreinigungsgerätes, wobei die - ebenfalls im Längsschnitt etwa U-förmige - Sperre geöffnet und dadurch die teils im Handgriff teils in dieser Sperre angeordnete Lochung zur Aufnahme des Behandlungsteiles ebenfalls geöffnet bzw. geteilt ist,
- Fig.19: eine Stirnansicht des in Fig.18 dargestellten Endes des Zahnreinigungsgerätes und Handgriffes bei geöffneter Sperre und vor dem Einsetzen eines als Pinsel ausgebildeten Behandlungsteiles sowie
- Fig.20: einen Querschnitt des Endes des Zahnreinigungsgerätes mit eingefügtem, als Pinsel ausgebildeten Behandlungsteil.

Bei der nachfolgenden Beschreibung sind übereinstimmende oder in ihrer Funktion sich entsprechende Teile auch bei etwas unterschiedlicher Gestaltung und Formg ebung mit übereins timmenden Bezugszahlen versehen.

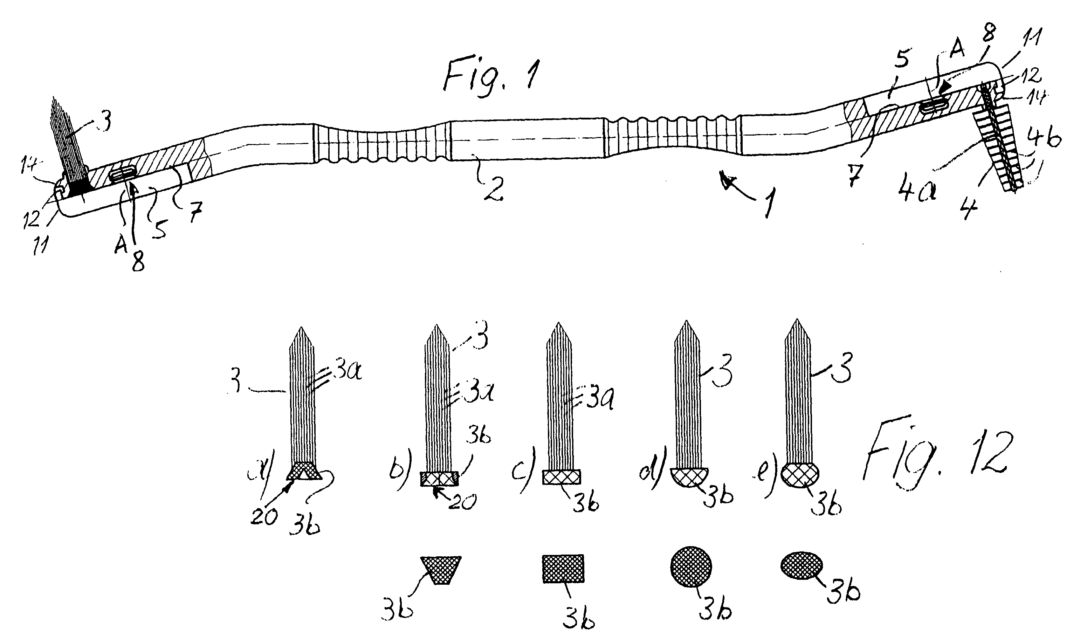

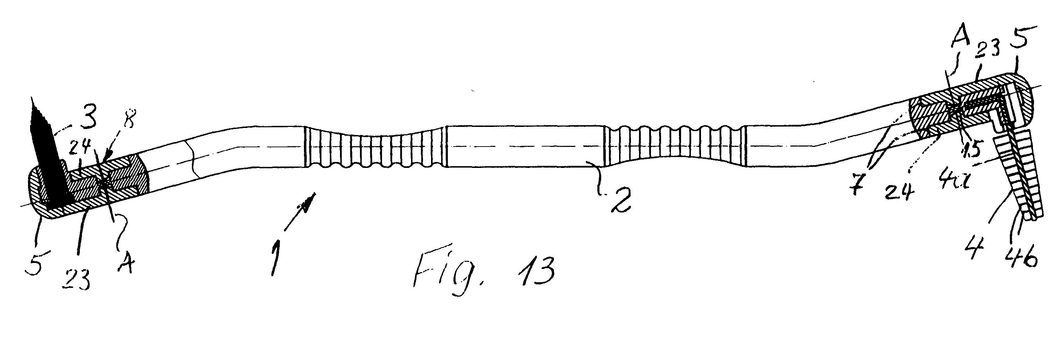

Ein im ganzen mit 1 bezeichnetes Zahnreinigungsgerät hat einen etwa stielförmigen, jedoch auch mit Greifhilfen versehenen Handgriff 2 und - im Ausführungsbeispiel gemäß Fig.1 und Fig.13 - an beiden Enden jeweils ein Interdental-Behandlungsteil 3 und 4 in Form einerseits eines Pinsels 3, der aus einem Borstenbüschel aus im wesentlichen parallelen Einzelborsten 3a und einer sich zusammenfassenden Halteplatte 3b besteht, und andererseits einer Bürste 4, die einen verdrillten Haltedraht 4a und von diesem etwa radial oder seitlich abstehende und gehaltene Borsten 4b aufweist. Denkbar wäre auch, daß eines dieser Behandlungsteile durch einen Zahnstocher ersetzt ist oder ersetzt wird, weil diese Behandlungsteile, die an dem Handgriff 2 quer zu dessen Längserstreckung vorstehend angeordnet sind, lösbar und austauschbar befestigt und in Gebrauchsstellung mittels einer in Sperrstellung festlegbaren, noch näher zu beschreibenden Sperre 5 verriegelt werden.

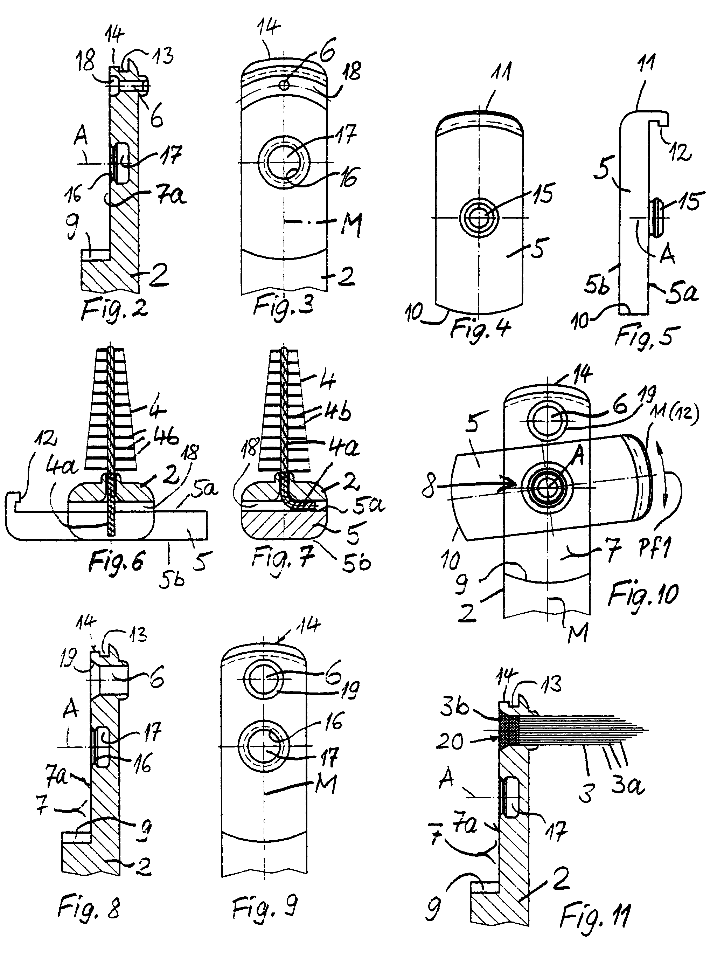

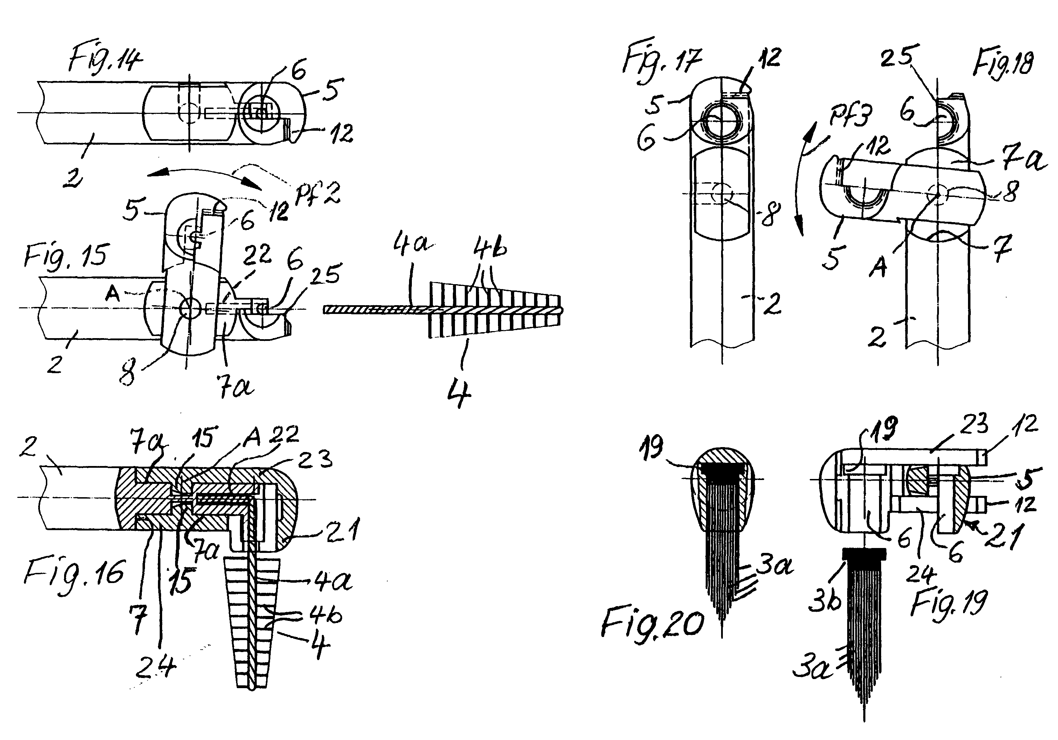

In den Figuren 2, 6 und 7 einerseits und in den Figuren 8 und 11 andererseits, ferner in den Figuren 15 und 16 einerseits und in den Figuren 18 bis 20 andererseits erkennt man, daß das jeweilige Behandlungsteil 3 oder eine zu ihm gehörige Halterung, also beispielsweise der Haltedraht 4a der Bürste 4, eine quer zu dem Handgriff 2 verlaufende Lochung 6 durchsetzt, deren Querschnittsabmessung natürlich der des aufzunehmenden Teiles entspricht, wobei die Lochung 6 in Fig.2 und 8 noch leer ist, während in den Fig.6 und 7 einerseits bzw. in Fig.11 andererseits das jeweilige Behandlungsteil darin eingesteckt ist, während bei den Ausführungsbeispielen gemäß Fig.13 bis 20 die jeweilige Lochung 6 in noch zu beschreibender Weise geteilt und ihre Wandungsteile zu einem Teil am Handgriff 2 und zum anderen Teil an der entsprechend gestalteten Sperre 5 vorgesehen sind.

Dabei ist das jeweilige Behandlungsteil 3 oder 4 oder seine Halterung bei gemäß Fig.6 und 10 geöffneter Sperre 5, wenn diese den Querschnitt der Lochung 6 und deren Eintritt freigibt, in diese Lochung einsteckbar, so daß sich danach die Anordnung gemäß Fig.6 oder 11 ergibt. In Schließstellung gemäß Fig.7 und außerdem gemäß Fig.1 überdeckt die Sperre 5 die jeweilige Lochung 6 und verhindert so das Entnehmen des Behandlungsteiles, das heißt, sie legt das Behandlungsteil durch ihre Schließstellung fest. Wird sie wieder in Offenstellung bewegt, kann das Behandlungsteil entfernt und ersetzt oder ausgetauscht werden.

Vor allem anhand der Fig.4 bis 7 und 10 sowie außerdem auch anhand der Fig.1 erkennt man, daß die Sperre 5 leistenförmig ausgebildet und in einer Aussparung 7, also einer Querschnittsverkleinerung des Handgriffes 2 derart angeordnet ist, daß sie in Sperr- und Gebrauchsstellung gemäß Fig.1 und 7 bezüglich des Querschnittes bündiger und vorsprungfreier Bestandteil des Handgriffes 2 ist. Außerdem ist in den Figuren dargestellt, daß diese Sperre 5 eine mit Abstand zu der Lochung 6 für das Behandlungsteil an dem Handgriff 2 angeordnete Drehlagerung 8 hat, deren Achse A etwa parallel zur Längsachse des jeweiligen Behandlungsteiles verläuft. Somit ergibt sich eine Verdrehbarkeit gem. dem Doppelpfeil Pf1 in Fig.10, durch die die leistenförmige Sperre 5 aufgrund ihrer hinsichtlich Länge und Breite unterschiedlichen Abmessungen so verdreht werden kann, daß sie die Lochung 6 freigibt oder aber bei einer Verdrehung in die Sperrposition gemäß Fig.7 und 1 überdeckt und dann in dieser Sperrposition eine Ergänzung des Handgriffes 2 in diesem Endbereich darstellt, also keine demgegenüber abstehende Vorsprünge oder Betätigungsflansche oder dergleichen hat. Solche Greifhilfen sind an der Sperre 5 in vorteilhafter Weise nicht nötig, weil sie selbst als Drehgriff erfasst und bewegt werden kann.

Die Aussparung 7 des Handgriffes 2 zur Aufnahme der Sperre 5 ist jeweils auf der dem Behandlungsteil, also dem Pinsel 3 und der Bürste 4, abgewandten Seite des Handgriffes 2 angeordnet und dabei auf der Seite der Sperre 5 abgeflacht. Diese Abflachung 7a reicht bis über die Lochung 6 und die dieser ebenen Abflachung 7a zugewandte, ebenfalls ebene Seite oder Unterseite 5a (vgl. Fig.5 und 6) der leistenförmigen Sperre 5 ist ebenfalls abgeflacht, so daß die einander zugewandten ebenen Seiten der Aussparung 7 und der Sperre 5 in Gebrauchsstellung aufeinanderliegen, wie es zum Beispiel auch in Fig.7 erkennbar ist, wobei unter Umständen sogar eine gegenseitige reibschlüssige Berührung zur lösbaren Festlegung der Sperre 5 vorgesehen sein kann.

In jedem Falle beaufschlagt die Sperre 5 in Sperrstellung einen Teil oder Bereich der Aussparung 7 oder gegebenenfalls sogar des Behandlungsteiles klemmend, wie es zum Beispiel in Fig.7 angedeutet ist, wo der Haltedraht 4a in Sperrstellung von der Sperre 5 umgebogen und niedergehalten ist, so daß sich zwischen diesen Teilen eine gewisse gegenseitige Haltewirkung ergibt.

Vor allem in Fig.1 wird deutlich, daß die der Lochung 6 und dem Behandlungsteil abgewandte Außenseite 5b der Sperre 5 in Höhe und Breite in Gebrauchsstellung mit der Oberfläche des Handgriffes 2 fluchtet bzw. die Oberfläche des Handgriffes vorsprungfrei fortsetzt, so daß die Sperre 5 in Sperrstellung in der Aussparung 7 den Querschnitt des Handgriffes 2 ergänzt und so die Aussparung 7 gerade ausfüllt.

Dabei ist die Lochung 6 zur Aufnahme und Halterung des Behandlungsteiles dem Ende des Handgriffes 2 jeweils näher als die Drehlagerung 8 der Sperre 5. Dies führt zu dem in Fig.10 deutlich dargestellten Ergebnis, wonach die Sperre 5 gegenüber dem Handgriff 2 in eine Querposition verdreht werden kann, um dann die Lochung 6 zum Wechseln des Behandlungsteiles freizugeben. Dabei steht die Sperre 5 in Offenstellung nur seitlich gegenüber dem Handgriff 2 vor und verlängert ihn in dieser Offenstellung nicht.

In Fig.10 (in der die Sperre gewissermaßen durchsichtig und somit auch mit Blick auf ihre Drehlagerung 8 dargestellt ist) wird außerdem deutlich, daß die Sperre 5 zwei von ihrer Drehlagerung 8 nach entgegengesetzten Richtungen ausgehende Arme aufweist, deren einer in Sperrstellung die Lochung 6 übergreift und deren anderer von der Drehlagerung 8 ausgehend in Richtung des Handgriffes 2 bis zu einem die Ausnehmung 7 begrenzenden Absatz 9 verläuft. Dieser Absatz 9 zwischen Handgriff 2 und Aussparung 7, der die Aussparung 7 auch nach der Mitte des Handgriffes hin begrenzt, ist etwa rechtwinklig zur Längserstreckungsrichtung angeordnet und in Querrichtung gem. den Figuren 3, 9 und 10 konkav gekrümmt und zwar symmetrisch zur Längsmittelebene M des Handgriffes 2. Gemäß den Figuren 4 und 10 ist die in Sperrstellung diesem Absatz 9 zugewandte Stirnseite 10 der Sperre 5 in entsprechender Weise und mit im wesentlichen übereinstimmenden Krümmungsradius konvex gekrümmt, wobei der Krümmungsradius dem Abstand dieser Stirnseite 10 von der Achse A der Drehlagerung 8 entspricht, so daß also im letzten Teil der Schließbewegung der Sperre beziehungsweise im ersten Teil ihrer Öffnungsbewegung die Stirnseite 10 von dem Absatz 9 gleitend und gegebenenfalls unter Überwindung einer gewissen Reibkraft geführt wird. Der Absatz 9 und die Stirnseite 10 können sich nämlich in Sperrstellung - gegebenenfalls klemmend - berühren, also zur Fixierung der Sperrstellung beitragen.

An der dem Absatz 9 und der Stirnseite 10 entgegengesetzten Stirnseite 11 der Sperre 5 ist im Ausführungsbeispiel ein hakenartiger, praktisch über die gesamte Stirnseite 11 reichender und ebenfalls in dieser Richtung gekrümmter Vorsprung 12 zum klemmenden und/oder rastenden Festlegen der Sperre 5 in Sperrstellung angeordnet. Dieser Vorsprung 12 könnte dabei an der Stirnseite 11 der Sperre 5 angreifen, ist aber im Ausführungsbeispiel an der Stirnseite 11 der Sperre 5 selbst vorgesehen und angeformt und über- und umgreift den mit einer entsprechenden gekrümmten nutförmigen Rinne 13 (vgl. insbes.

Fig.2, 8 und 11) versehenen Rand 14 des stirnseitigen Endes des Handgriffes 2 in Sperrstellung. Vor allem diese Berührung zwischen Vorsprung 12 und Rand 14 bzw. Rinne 13 kann dabei reibschlüssig und gegebenenfalls auch rastend erfolgen und somit die Sperre 5 in Schließstellung lösbar fixieren. Dabei kann diese Fixierung schon alleine ausreichen oder mit den schon erwähnten zusätzlichen Reib- und Klemmkräften zusammenwirken. Beispielsweise könnten an der dem Absatz 9 zugewandten Stirnseite 10 der Sperre 5 und/oder an diesem Absatz 9 Haltemittel, zum Beispiel Reibschluß, zur lösbaren Festlegung der Sperrstellung vorgesehen sein.

Zusätzlich könnte noch ein Anschlag vorgesehen sein, der eine Begrenzung der Schwenkbewegung der Sperre in ihrer Sperrstellung ergibt, so daß sie nur nach einer Seite öffenbar wäre und in der entgegengesetzten Richtung nicht über ihre Sperrstellung hinaus verdreht werden kann. Andererseits wird dies jedoch auch dadurch verhindert, daß der Benutzer selbst beim Einstellen der Sperrstellung aufgrund der Maßübereinstimmungen zwischen Sperre 5 und Handgriff 2 die Sperrstellung präzise bemerkt und einstellen kann.

Zur Realisierung der schon erwähnten Drehlagerung 8 ist an dem einen der relativ zueinander verdrehbaren Teile ein pilzförmiger Vorsprung 15 und an dem Gegenstück eine diesen pilzförmigen Vorsprung 15 rastend und den Pilzkopf mit einem Kragen 16 oder Vorsprung hintergreifende Ausnehmung 17 vorgesehen, wobei der pilzförmige Vorsprung 15 in Fig.5 und die entsprechend geformte Ausnehmnung 17 in den Figuren 2, 8 und 11 deutlich erkennbar sind. Der pilzförmige Vorsprung 15 ist dabei im Ausführungsbeispiel also an der Sperre 5 und die Ausnehmung 17 an dem Handgriff 2 innerhalb der Aussparung 7 vorgesehen.

Anhand vor allem der Fig.6 und 7 ist dargestellt, daß ein als auswechselbare Bürste 4 ausgebildetes Behandlungsteil dienen kann, wobei Borsten 4b von dem mittleren Haltedraht 4a gehalten werden und von diesem etwa radial abstehen. Dabei durchsetzt der Haltedraht 4a die entsprechend enge Lochung 6 des Handgriffes 2 - im Bereich der Aussparung 7 - und steht gemäß Fig.6 über die Lochung 6 in den Bereich der drehbaren Sperre 5 über. Somit ist er gemäß Fig.7 durch die Verdrehung der Sperre 5 in ihre Sperrstellung gegenüber der Lochung 6 und deren Verlauf umbiegbar und dadurch festlegbar. Der Benutzer kann also diese Bürste 4 mittels ihres Haltedrahtes 4a in die Lochung 6 bis zum Anschlag einstecken und dann die Sperre schließen, wodurch die Bürste automatisch festgelegt wird, weil der Überstand des Haltedrahtes 4a zu einer Art Haken verformt wird.

Die Aussparung 7 hat dabei an ihrer der Sperre 5 und deren Unterseite 5a zugewandten Seite 7a eine quer zur Längserstreckung des Handgriffes 2 - insbesondere mit der Achse A des Drehlagers 8 als Krümmungszentrum gekrümmt - verlaufende Nut 18 zur Aufnahme des durch die Sperre 5 umgebogenen Haltedrahtes 4a, wobei die Lochung 6 zum Durchstecken des Haltedrahtes 4a in dieser Nut 18 am Nutengrund mündet, was bei gleichzeitiger Betrachtung der Fig.2 und 3 besonders deutlich wird. Der Überstand des Haltedrahtes 4a wird also in eine in ihren Abmessungen auf die abgestimmte Nut 18 umgebogen, so daß die Unterseite 5a der Sperre 5 dennoch an der Oberseite 7a der Aussparung 7 anliegen kann, obwohl zwischen der Sperre 5 und dem Handgriff 2 der Überstand des Haltedrahtes 4a unterzubringen ist. Die Biegekräfte des Haltedrahtes 4a können dabei zur lösbaren Festlegung der Sperre einen Beitrag leisten, weil daraus eine zusätzliche Verklemmung oder eine Vergrößerung der Reibkraft unmittelbar an dem Haltedraht 4a einerseits, andererseits aber auch in der Drehlagerung 8 bewirkt werden kann.

Fig.11 zeigt die Halterung eines als Pinsel 3 ausgebildeten Behandlungsteiles, bei welchem einzelne Borsten 3a durch eine Halteplatte 3b zusammengehalten werden. Dabei erkennt man vor allem in Fig.11, daß die radiale Ausdehnung der Halteplatte 3b den Querschnitt des Borstenbündels oder des Pinsels 3 übertrifft und das Borstenbündel durch die die Halteplatte 3b formschlüssig aufnehmende und entsprechend bemessene Lochung 6 gesteckt ist, wobei die Lochung 6 in diesem Falle an ihrem dem Austritt der Borsten 3a abgewandten Eintrittsbereich eine der Form und Größe der Halteplatte 3b entsprechende Erweiterung 19 hat, die man besonders gut in Fig.8 erkennt. In Gebrauchsstellung ist die Halteplatte 3b gemäß Fig.11 etwa bündig mit dem Lochungsrand beziehungsweise dem Rand dieser Erweiterung 19, so daß die Sperre 5 mit ihrer Unterseite 5a gut darüber bewegt werden kann. Sie kann also in Schließstellung an der den Borsten 3a abgewandten Oberfläche 20 der Halteplatte 3b anliegen, gegebenenfalls sogar mit etwas Druck, um eine gute Festlegung des Pinsels 3 zu bewirken und gleichzeitig wiederum eine gegenseitige Verklemmung und Fixierung der Sperrstellung zu begünstigen oder herbeizuführen.

In den Figuren 12b bis 12e ist noch angedeutet, daß die Halteplatte 3b eine etwa ovale (Fig.12e), kreisförmige (Fig.12d) oder mehreckige, also zum Beispiel rechteckige (Fig.12c) oder trapezförmige (Fig.12b) Umrißform oder Außenkontur und dabei einen halbkugelförmigen, plattenförmigen und insbesondere sich verjüngenden Längsschnitt haben kann, der in die entsprechend geformte Erweiterung 19 der Haltelochung 6 des Handgriffes 2 paßt und zu einer Festlegung des Pinsel 3 in axialer Richtung führt. Der Pinsel 3 ist also bei geschlossener Sperre 5 in beiden einander entgegengesetzten axialen Richtungen fixiert, kann aber bei geöffneter Sperre 5 aus der Lochung 6 wieder herausgezogen werden.

Es wurde schon erwähnt, daß der Handgriff 2 gemäß Fig.1 an zwei Stellen, nämlich an den einander entgegengesetzten Endbereichen, jeweils einen Behandlungsteil und dabei zwei unterschiedliche Behandlungsteile aufweist, die jeweils von einer drehbaren Sperre 5 gemäß der vorangegangenen Beschreibung in Gebrauchsstellung lösbar und auswechselbar gehalten sind. Die beiden Behandlungsteile an den entgegengesetzten Enden des Stieles oder Handgriffes 2 des Zahnreinigungsgerätes stehen dabei nach einander entgegengesetzten Seiten gegenüber diesem Stiel oder Handgriff 2 vor. Dabei sind diese Endbereiche mit den Behandlungsteilen gegenüber dem übrigen Verlauf des Handgriffes 2 jeweils um einen stumpfen Winkel geringfügig abgebogen. An dem einen Ende ist dabei ein von einem Borstenbündel gebildeter, insbesondere angespitzter Pinsel 3 und an dem anderen Ende eine Bürste 4 mit einem Haltedraht 4a und davon gehaltenen und abstehenden Borsten 4b vorgesehen, so daß der Benutzer entsprechende vielfältige Möglichkeiten zur Reinigung von Interdental-Zwischenräumen hat.

Bei dem schon erwähnten Zahnreinigungsgerät 1 gemäß den Figuren 13 bis 20 ist eine noch stabilere Sperre und festere Halterung der Behandlungsteile, also einer Bürste 4 (Fig.14 bis 16) und eines Pinsels 3 (Fig.17 bis 20) vorgesehen. Gleichzeitig ist auch die Handhabung beim Einsetzen oder Auswechseln der Behandlungsteile einfach oder sogar vereinfacht.

Dies wird dadurch erreicht, daß die Lochung 6 für das jeweilige Behandlungsteil ihrer Länge nach geteilt ist und ein Teil der Innenwandung der Lochung 6 an dem Handgriff 2 und der die Lochung 6 in Gebrauchsstellung ergänzende Teil der Innenwandung dieser Lochung an der Sperre 5 und insbesondere an einem etwa parallel zur Drehachse A der Drehlagerung 8 dieser Sperre 5 verlaufenden Schenkel 21 angeordnet ist. Vor allem in Fig.15 und in Fig.18 sowie Fig.19 wird deutlich, daß dadurch die Lochung 6 bei geöffneter Sperre 5 für das Einfügen des Behandlungsteiles oder einer zu ihm gehörigen Halterung geteilt und freigegeben ist und nach dem Verschwenken oder Verdrehen der Sperre 5 in Schließstellung (Fig.14 und 16 bzw. Fig.17 und 20) das Behandlungsteil oder die Halterung eines Behandlungsteiles umschließt.

Gemäß Fig.19 und 20 hat dabei die geteilte Lochung 6 eine Erweiterung 19 und gemäß Fig.14 bis 16 weist sie eine in Richtung auf die Drehlagerung 8 der Sperre 5 zu verlaufende Bohrung 22 oder eine durch die Sperre 5 verschließbare Nut zur Aufnahme eines in diesem Bereich umgebogenen Haltedrahtes 4b auf. Eine Bürste 4 mit einem Haltedraht 4b kann also gemäß Fig.15 zunächst in Längsrichtung des Handgriffes 2 in diese Bohrung 22 eingeschoben werden. Danach wird der Haltedraht 4b umgebogen, so daß die in Fig.16 dargestellte Lage eingenommen wird, wobei der unmittelbar die Bürste 4 tragende umgebogene Teil dann, wie im Ausführungsbeispiel gemäß Fig.1 und 7, quer zur Längserstreckung des Handgriffes 2 zu liegen kommt. Dieser Teil ist dann in der Lochung 6 gehalten, die nach dem Verschwenken der Sperre 5 gemäß dem Doppelpfeil Pf2 in Fig.15 in Schließstellung gebracht wird und damit dann auch die Lochung 6 nach der Seite hin und darüber hinaus auch nach oben hin abschließt.

Gemäß Fig.17 bis 20 wird in gleicher Weise die Erweiterung 19 und die Lochung 6 zur Aufnahme eines als Pinsel 3 ausgebildeten Behandlungsteiles verschlossen, indem in diesem Falle die Sperre gemäß dem Doppelpfeil Pf3 in Schließstellung geschwenkt werden kann, nachdem ein entsprechender Pinsel 3 formschlüssig eingefügt wurde, so daß er die in Fig.20 dargestellte Lage einnimmt. Bei geöffneter Sperre braucht der Pinsel 3 mit seiner Halteplatte 3b nur seitlich in den am Handgriff 2 befindlichen Teil der Lochung 6 eingesetzt zu werden, indem er quer zu sich selbst in diesen Teil der Lochung 6 bewegt wird, wonach die Sperre verschlossen und dadurch der Pinsel 3 festgelegt wird. Er braucht also nicht, wie beim zuerst beschriebenen Ausführungsbeispiel, durch eine Lochung hindurchgeführt zu werden.

In diesem Ausführungsbeispiel gemäß Fig.13 bis 20 weist die Sperre 5 zwei etwa leistenförmige, parallel zueinander verlaufende Teile 23 und 24 auf, die an parallelen Abflachungen 7a von Aussparungen 7 des Handgriffes 2 drehbar gelagert sind. Der einen Teil der Lochung 6 aufweisende Bereich oder Schenkel 21 der Sperre 5 verbindet dabei diese beiden leistenförmigen Teile 23 und 24 und verleiht der gesamten Sperre 5 in diesem Falle insgesamt einen etwa U-förmigen Längsschnitt, den man besonders gut in Fig.16, aber auch in Fig.19 erkennt. Die beiden leistenförmigen Teile 23 und 24 bilden dabei die U-Schenkel dieses U-förmigen Längsschnittes, währendder Verbindungsschenkel 21 als U-Quersteg angesehen werden kann, wobei er in vorteilhafter Weise denjenigen leistenförmigen Teil 24 überragt, auf dessen Seite das jeweilige Behandlungsteil übersteht, so daß dieses über eine größere Länge geführt und gehalten wird. Die Drehlagerung 8 ist jeweils an den leistenförmigen Teilen 23 und 24, also den U-Schenkeln dieser Sperre 5 vorgesehen, was besonders deutlich in Fig.16 erkennbar ist, wo entsprechende Vorsprünge 15 der leistenförmigen Teile 23 und 24 gegeneinandergerichtet in entsprechende Lageröffnungen der Abflachungen 7a der Aussparungen 7 eingreifen und miteinander fluchten, so daß sie dieselbe Drehachse A haben.

Der dem Handgriff 2 jeweils zugehörige Teil der Lochung 6 ist sowohl für die Halterung eines Pinsels 3 als auch einer Bürste 4 derart an der Stirnseite des Handgriffes 2 angeordnet, daß sich bei geschlossener Sperre 5 die Lochungsmitte in einer Längsmittelebene auch durch die Drehlagerung 8 der Sperre 5 befindet. Somit ergibt sich eine weitgehend symmetrische Anordnung des Behandlungsteiles in seiner verriegelten Position.

Vor allem in Fig.18 erkennt man, daß die Trennebene der Lochung 6 zur Aufnahme des Pinsels 3 der Längsmittelebene durch die Drehlagerung 8 und die Drehachse A sowie die geschlossene Lochung 6 entspricht. Der Pinsel 3 kann also von der Seite her in den zu dem Handgriff 2 gehörigen Lochungsteil eingefügt werden, wonach die Sperre 5 in Schließstellung geklappt oder geschwenkt wird und damit dann dieser Pinsel 3 und seine Halteplatte 3b in formschlüssiger Weise umgriffen und fixiert werden. Somit ist das Einfügen oder auch das Auswechseln eines solchen Pinsels 3 sehr einfach.

Für die Aufnahme des Haltedrahtes 4b der Bürste 4 erstreckt sich der an der Stirnseite des Handgriffes 2 angeordnete Teil der Lochung 6 beidseits der Längsmittelebene und ist an der Stirnseite von dieser wegweisend offen, das heißt, der Haltedraht 4b wird beim Einfügen in dieser Längsmittelebene bewegt. Dabei reicht dieser am Handgriff 2 befindliche Teil der Lochung über mehr als die Hälfte des Lochungsquerschnittes und der an der Sperre 5 befindliche Lochungsteil ist in Drehrichtung über seine Länge offen und reicht ebenfalls über mehr als den halben Lochungsquerschnitt, so daß in Schließstellung eine gegenseitige Überdeckung unter Freilassung der Lochung 6 selbst erreicht wird. Dies ist für die Aufnahme des relativ schlanken Haltedrahtes 4b zweckmäßig und erlaubt es, den Haltedraht 4b zunächst in Längsrichtung des Handgriffes in die Öffnung 22 einzuschieben und dann in den Verlauf der Lochung 6 umzubiegen, um ihn dort mit der Sperre 5 zu arretieren, wobei die Öffnung 22 in die Lochung 6 mündet.

In beiden Ausführungsbeispielen steht der Handgriff 2 im Bereich seiner Stirnseite über den an ihn befindlichen Teil der Lochung 6 über. Dieser Überstand 25 bildet dabei jeweils einen Anschlag für die dreh- oder schwenkbare Sperre 5 in deren Schließstellung, so daß eine genau definierte Lage der Schließstellung der Sperre 5 vorhanden ist und damit auch die Größe der geteilten Lochung 6 festliegt und nicht durch eventuelle unterschiedliche Schwenkstellungen der Sperre 5 variieren kann.

Dabei ist in diesem Ausführungsbeispiel sowohl bei der Halterung der Bürste 4 als auch des Pinsels 3 vorgesehen, daß die Sperre 5 den als Anschlag dienenden Überstand 25 des Handgriffes 2 in Schließstellung an der Stirnseite übergreift und in diesem übergreifenden Bereich eine Führung, Raste, lösbare Klemmverbindung oder dergleichen Halterung aufweist, die dabei analog der entsprechenden Halterung gemäß Fig.2 bis 11 gestaltet sein kann, wobei in diesem Falle jedes der leistenförmigen Teile 23 und 24 entsprechende Eingriffsmittel oder Halteteile 12 haben kann.

Wie in dem Ausführungsbeispiel gemäß den Figuren 1 bis 12 kann auch in diesem Falle die Sperre 5 in Schließstellung mit einer Berührstelle des Handgriffes, beispielsweise an der Stirnseite, eine lösbare Rast- oder Klippsverbindung aufweisen, die ein ungewolltes Öffnen während der Benutzung verhindert.

Das Zahnreinigungsgerät 1 mit einem Handgriff 2 hat an einem oder bevorzugt an zwei einander entgegengesetzten Enden ein Interdental-Behandlungsteil beispielsweise in Form eines Pinsel 3 oder einer Bürste 4, gegebenenfalls auch eines Zahnstochers. Dieses Behandlungsteil ist dabei quer zur Längserstreckung des Handgriffes 2 vorstehend angeordnet und lösbar und austauschbar befestigt, wobei die Befestigung mittels einer in Sperrstellung lösbar festlegbaren Sperre 5 erfolgt. Dazu ist das Behandlungsteil oder eine zu ihm gehörige Halterung, beispielsweise ein Haltedraht 4a in Gebrauchsstellung in eine quer zu der Längserstreckung des Handgriffes 2 verlaufende Lochung 6 eingesteckt und wenn die Sperre 5 diese Lochung 6 freigibt, kann das Behandlungsteil wieder entnommen und durch ein anderes ersetzt werden. In Schließstellung überdeckt hingegen die Sperre 5 die Lochung 6 und verhindert somit das Entnehmen des darin eingesetzten Behandlungsteiles. Dabei ist die Sperre 5 leistenförmig ausgebildet und in einer Aussparung 7 oder Querschnittsverkleinerung des Handgriffes 2 derart angeordnet und eingepaßt, daß sie in Sperr- und Gebrauchsstellung bezüglich des Querschnittes bündiger oder vorsprungfreier Bestandteil des Handgriffes 2 ist. Mit Abstand zu der Lochung 6 hat die Sperre 5 eine Drehlagerung 8, deren Achse A parallel zur Längsachse und zur Einsteckrichtung des jeweiligen Behandlungsteiles verläuft. Die Sperre 5 ist also selbst drehgriffartig ausgebildet und kann gegenüber dem Handgriff 2 und der Aussparung 7 in eine Quer-Stellung gebracht werden, in welcher die Lochung 6 freigegeben ist. Wird die Sperre wiederum in fluchtende Lage mit dem Handgriff 2 gebracht, ist sie mit diesem bündig und schließt gleichzeitig die Lochung 6 ab, sperrt also die Entnahme des Behandlungsteiles und fixiert dieses. Die Lochung 6 kann dabei auch teils am Handgriff, teils an der Sperre selbst vorgesehen sein, sich also in Schließstellung der Sperre zu der eigentlichen Lochung ergänzen.

## Patentansprüche

1. Zahnreinigungsgerät (1) mit einem Handgriff (2) und mit wenigstens einem Interdental-Behandlungsteil (3,4) in Form zum Beispiel eines Pinsels und/oder einer Bürste (4) und/oder eines Zahnstochers, welches Behandlungsteil an dem Handgriff (2) quer zu dessen Längserstreckung vorstehend angeordnet, lösbar und austauschbar befestigt und in Gebrauchsstellung mittels einer in Sperrstellung festlegbaren Sperre (5) verriegelt ist, wobei das Behandlungsteil oder eine zu ihm gehörige Halterung in Gebrauchsstellung eine quer zu dem Handgriff (2) verlaufende Lochung (6) durchsetzt und das Behandlungsteil (3,4) oder seine Halterung bei geöffneter Sperre (5), wenn diese den Lochungsquerschnitt freigibt, in die Lochung (6) einsteckbar ist und wobei ferner die Sperre (5) in Schließstellung die Lochung (6) überdeckt und das Entnehmen des Behandlungsteiles verhindert, **dadurch gekennzeichnet, daß** die Sperre (5) leistenförmig ausgebildet und in einer Aussparung (7) oder an einer Querschnittsverkleinerung des Handgriffes (2) derart angeordnet ist, daß sie in Sperr- und Gebrauchsstellung bezüglich des Querschnittes bündiger oder vorsprungfreier Bestandteil des Handgriffes (2) ist, und daß diese Sperre (5) eine mit Abstand zu der Lochung für das Behandlungsteil an dem Handgriff (2) angeordnete Drehlagerung (8) hat, deren Achse (A) parallel zur Längsachse des Behandlungsteiles verläuft.

2. Zahnreinigungsgerät nach Anspruch 1, **dadurch gekennzeichnet, daß** die Aussparung (7) des Handgriffes (2) zur Aufnahme der Sperre (5) auf der dem vorstehenden Behandlungsteil abgewandten Seite des Handgriffes (2) angeordnet und zumindest bereichsweise abgeflacht ist, daß diese Abflachung (7a) bis über die Lochung (6) reicht und daß die dieser Abflachung (7a) zugewandte Seite (5a) der leistenförmigen Sperre (5) ebenfalls abgeflacht und eben ausgebildet ist.

3. Zahnreinigungsgerät nach Anspruch 1 oder 2, **dadurch gekennzeichnet, daß** die Sperre (5) in Sperrstellung einen Teil oder Bereich des Behandlungsteiles klemmend beaufschlagt.

4. Zahnreinigungsgerät nach einem der Ansprüche 1 bis 3, **dadurch gekennzeichnet, daß** die der Lochung (6) und dem Behandlungsteil abgewandte Außenseite (5b) der Sperre (5) in Höhe und Breite in Gebrauchsstellung mit der Oberfläche des Handgriffes (2) fluchtet und die Sperre (5) in ihrer Sperrstellung in der Aussparung (7) den Querschnitt des Handgriffes (2) ergänzt.

5. Zahnreinigungsgerät nach einem der Ansprüche 1 bis 4, **dadurch gekennzeichnet, daß** die Lochung (6) zur Aufnahme und Halterung des Behandlungsteiles dem Ende des Handgriffes (2) näher als die Drehlagerung (8) der Sperre (5) angeordnet ist.

6. Zahnreinigungsgerät nach einem der Ansprüche 1 bis 5, **dadurch gekennzeichnet, daß** die Sperre (5) zwei von ihrer Drehlagerung (8) nach entgegengesetzten Richtungen ausgehende Arme aufweist, deren einer in Sperrstellung die Lochung (6) übergreift und deren anderer von der Drehlagerung (8) ausgehend in Richtung des Handgriffes (2) bis zu einem die Ausnehmung (7) begrenzenden Absatz (9) verläuft.

7. Zahnreinigungsgerät nach einem der Ansprüche 1 bis 6, **dadurch gekennzeichnet, daß** der Absatz (9) zwischen Handgriff (2) und Aussparung etwa rechtwinklig zur Längserstreckungsrichtung angeordnet und in Querrichtung insbesondere konkav gekrümmt ist und daß die in Sperrstellung diesem Absatz (9) zugewandte Stirnseite (10) der Sperre (5) in entsprechender Weise konvex gekrümmt ist, wobei der Krümmungsradius dem Abstand dieser Stirnseite (10) von der Achse (A) der Drehlagerung (8) entspricht.

8. Zahnreinigungsgerät nach einem der Ansprüche 1 bis 7, **dadurch gekennzeichnet, daß** sich der Absatz (9) und die Stirnseite (10) in Sperrstellung berühren, gegebenenfalls klemmend oder rastend berühren.

9. Zahnreinigungsgerät nach einem der Ansprüche 1 bis 8, **dadurch gekennzeichnet, daß** an wenigstens einer der Stirnseiten der Sperre eine Einrichtung zum Fixieren der Sperrstellung durch Reib- oder Klemmkraft und/oder Verrastung vorgesehen ist.

10. Zahnreinigungsgerät nach Anspruch 9, **dadurch gekennzeichnet, daß** an der dem Absatz (9) entgegengesetzten Stirnseite (11) der Sperre (5) ein Vorsprung zum klemmenden und/oder rastenden Festlegen der Sperre (5) in Sperrstellung angeordnet ist.

11. Zahnreinigungsgerät nach Anspruch 9 oder 10, **dadurch gekennzeichnet, daß** der Vorsprung (12) an der Stirnseite (11) der Sperre (5) selbst vorgesehen ist und den Rand des stirnseitigen Endes des Handgriffes (2) in Sperrstellung über- und/oder umgreift, insbesondere reibschlüssig oder rastend an dem Ende des Handgriffes angreift.

12. Zahnreinigungsgerät nach einem der Ansprüche 1 bis 11, **dadurch gekennzeichnet, daß** an der dem Absatz (9) zugewandten Stirnseite (10) der Sperre (5) und/oder an diesem Absatz (9) Haltemittel zum lösbaren Festlegen der Sperrstellung, insbesondere eine Verklemmung und/oder eine Verrastung vorgesehen ist.

13. Zahnreinigungsgerät nach einem der Ansprüche 1 bis 12, **dadurch gekennzeichnet, daß** als Drehlagerung an dem einen Teil ein pilzförmiger Vorsprung (15) und an dem Gegenstück eine diesen pilzförmigen Vorsprung (15) rastend und den Pilzkopf mit einem Kragen (16) oder Vorsprung hintergreifende Ausnehmung (17) vorgesehen sind, wobei der pilzförmige Vorsprung (15) insbesondere an der Sperre (5) und die Ausnehmung (17) an dem Handgriff (2) vorgesehen sind.

14. Zahnreinigungsgerät mit einer auswechselbar vorgesehenen Bürste (4), deren Borsten (4b) von einem mittleren Haltedraht (4a) gehalten sind, nach einem der vorstehenden Ansprüche, **dadurch gekennzeichnet, daß** der Haltedraht (4a) die Lochung (6) des Handgriffes (2) durchsetzt und über die Lochung (6) in den Bereich der drehbaren Sperre (5) übersteht und durch die Verdrehung der Sperre 5 in ihre Schließstellung gegenüber der Lochung (6) umbiegbar ist.

15. Zahnreinigungsgerät nach Anspruch 14, **dadurch gekennzeichnet, daß** die Aussparung (7) an ihrer der Sperre (5) zugewandten Seite (7a) eine quer zur Längserstreckung des Handgriffes (2) - insbesondere mit der Achse (A) des Drehlagers (8) als Krümmungszentrum gekrümmt - verlaufende Nut (18) zur Aufnahme des durch die Sperre (5) umgebogenen Haltedrahtes (4a) aufweist und daß die Lochung (6) zum Durchstecken des Haltedrahtes (4a) in dieser Nut (18), insbesondere am Nutengrund, mündet.

16. Zahnreinigungsgerät mit einem pinselförmigen Behandlungsteil (3), das von einem aus etwa parallelen Borsten (3a) bestehenden Borstenbündel gebildet ist, welches an seinem dem Behandlungsende entgegengesetzten Ende insbesondere verschweißt und/oder mit einer Halteplatte (3b) verbunden ist nach einem der vorstehenden Ansprüche, **dadurch gekennzeichnet, daß** die radiale Ausdehnung der Halteplatte (3b) den Querschnitt des Borstenbündels oder Pinsels (3) übertrifft und das Borstenbündel durch eine die Halteplatte (3b) formschlüssig aufnehmende Lochung (6) gesteckt ist, wobei die Lochung (6) an ihrem dem Austritt der Borsten (3a) abgewandten Eintrittsbereich eine der Form und Größe der Halteplatte (3b) entsprechende Erweiterung (19) hat und die Halteplatte (3b) etwa bündig mit dem Rand der Lochung (6) oder der Erweiterung (19) ist, und daß die Sperre (5) in Schließstellung an der Oberfläche (20) der Halteplatte (3b) insbesondere mit Druck anliegt oder nahezu anliegt.

17. Zahnreinigungsgerät nach Anspruch 16, **dadurch gekennzeichnet, daß** die Halteplatte (3b) eine etwa ovale, kreisförmige oder mehreckige Umrißform oder Außenkontur und einen halbkugelförmigen, plattenförmigen und insbesondere sich verjüngenden Längsschnitt hat, der in die entsprechend geformte Erweiterung (19) der Haltelochung (6) des Handgriffes (2) paßt und in axialer Richtung darin gehalten ist.

18. Zahnreinigungsgerät nach einem der vorstehenden Ansprüche, **dadurch gekennzeichnet, daß** der Handgriff (2) an wenigstens zwei Stellen, insbesondere an den einander entgegengesetzten Endbereichen jeweils einen Behandlungsteil, insbesondere dabei zwei unterschiedliche Behandlungsteile aufweist, die jeweils von einer drehbaren Sperre (5) in Gebrauchsstellung lösbar und auswechselbar gehalten sind.

19. Zahnreinigungsgerät nach einem der Ansprüche 1 bis 18, **dadurch gekennzeichnet, daß** die beiden Behandlungsteile an den entgegengesetzten Enden des Stieles oder Handgriffes (2) nach einander entgegengesetzten Seiten gegenüber dem Stiel oder Handgriff (2) vorstehen.

20. Zahnreinigungsgerät nach einem der Ansprüche 1 bis 19, **dadurch gekennzeichnet, daß** an dem einen Ende ein von einem Borstenbündel gebildeter, insbesondere angespitzter Pinsel (3) und an dem anderen Ende eine Bürste (4) mit einem Haltedraht (4a) und davon abstehenden Borsten (4b) vorgesehen sind.

21. Zahnreinigungsgerät nach einem der vorstehenden Ansprüche, **dadurch gekennzeichnet, daß** die Lochung (6) für wenigstens ein Behandlungsteil ihrer Länge nach derart geteilt ist, daß ein Teil der Innenwandung der Lochung (6) an dem Handgriff (2) und der sie in Gebrauchsstellung ergänzende Teil der Innenwandung an der Sperre (5) oder an einem etwa parallel zur Drehachse (A) der Sperre (5) verlaufenden Schenkel (21) dieser Sperre angeordnet ist und daß die Lochung (6) bei geöffneter Sperre (5) für das Einfügen des Behandlungsteiles oder einer zu ihm gehörigen Halterung geteilt und freigegeben ist und nach dem Verschwenken oder Verdrehen der Sperre (5) in Schließstellung das Behandlungsteil oder die Halterung eines Behandlungsteiles umschließt.

22. Zahnreinigungsgerät nach Anspruch 21, **dadurch gekennzeichnet, daß** die geteilte Lochung (6) eine Erweiterung (19) oder eine insbesondere in Richtung der Drehlagerung (8) der Sperre (5) verlaufende Bohrung (22) oder eine durch die Sperre (5) verschließbare Nut zur Aufnahme eines in diesem Bereich umgebogenen Haltedrahtes (4a) aufweist.

23. Zahnreinigungsgerät nach Anspruch 21 oder 22, **dadurch gekennzeichnet, daß** die Sperre (5) zwei etwa leistenförmige, parallel zueinander verlaufende Teile (23,24) aufweist, die an parallelen Abflachungen (7a) von Aussparungen (7) des Handgriffes (2) drehbar gelagert sind, daß der einen Teil der Lochung (6) aufweisende Bereich oder Schenkel (21) der Sperre (5) die beiden leistenförmigen Teile (23,24) verbindet und daß die gesamte Sperre (5) insgesamt einen etwa U-förmigen Längsschnitt aufweist, wobei die beiden leistenförmigen Teile (23,24) die U-Schenkel bilden und die Drehlagerung (8) aufweisen.

24. Zahnreinigungsgerät nach einem der Ansprüche 21 bis 23,
**dadurch gekennzeichnet, daß** der dem Handgriff (2) zugehörige Teil der Lochung (6) derart an der Stirnseite des Handgriffes (2) angeordnet ist, daß sich bei geschlossener Sperre (5) die Lochungsmitte in einer Längsmittelebene auch durch die Drehlagerung (8) der Sperre (5) befindet.

25. Zahnreinigungsgerät mit einem pinselförmigen Behandlungsteil nach einem der Ansprüche 16 oder 21 bis 24, **dadurch gekennzeichnet, daß** die Trennebene der Lochung (6) zur Aufnahme des Pinsels (3) der Längsmittelebene durch die Drehlagerung (8) und die geschlossene Lochung (6) entspricht.

26. Zahnreinigungsgerät mit einer auswechselbar vorgesehenen Bürste (4) und einem mittleren Haltedraht (4a) nach einem der Ansprüche 21 bis 24 oder 14, **dadurch gekennzeichnet, daß** der an der Stirnseite des Handgriffes (2) angeordnete Teil der Lochung (6) sich beidseits der Längsmittelebene erstreckt und an der Stirnseite von dieser wegweisend offen ist und über mehr als die Hälfte des Lochungsquerschnittes reicht und daß der an der Sperre (5) befindliche Lochungsteil in Drehrichtung über seine Länge offen ist und ebenfalls über mehr als den halben Lochungsquerschnitt reicht.

27. Zahnreinigungsgerät nach einem der Ansprüche 1 bis 26, **dadurch gekennzeichnet, daß** der Handgriff (2) im Bereich seiner Stirnseite über den an ihm befindlichen Teil der Lochung (6) übersteht und dieser Überstand (25) einen Anschlag für die drehbare Sperre (5) in deren Schließstellung bildet.

28. Zahnreinigungsgerät nach Anspruch 27, **dadurch gekennzeichnet, daß** die Sperre (5) den als Anschlag dienenden Überstand (25) des Handgriffes (2) in Schließstellung an der Stirnseite übergreift und in diesem übergreifenden Bereich insbesondere eine Führung, Raste, lösbare Klemmverbindung oder dergleichen Halterung aufweist.

29. Zahnreinigungsgerät nach einem der vorstehenden Ansprüche, **dadurch gekennzeichnet, daß** die Sperre (5) in Schließstellung mit einer Berührstelle des Handgriffes eine lösbare Klippsverbindung aufweist.

## Claims

1. A teeth-cleaning device (1) with a handle (2) and at least one interdental treatment element (3,4) in the form of, for example, a soft brush and/or a hard brush (4) and/or a toothpick, which treatment element is provided on the handle (2) protruding transversely to its longitudinal extension, in a detachable and exchangeable manner and is locked in the operating position by means of a lock (5) which can be fastened in a locked position, wherein the treatment element or a retaining device associated with it in the operating position passes through a hole (6) which extends transversely to the handle (2) and the treatment element (3,4) or its retaining device in the case of an open lock (5), when it exposes the cross-section of the hole, can be inserted into the hole (6) and, furthermore, wherein in the closed position the lock (5) overlaps the hole (6) and prevents the removal of the treatment element, **characterised in that** the lock (5) is in the form of a strip and is provided in a recess (7) or in a part of the handle (2) having a reduced cross section, in such a manner that in the locked or operating position it is flush with or is a protrusion-free component of the handle (2),relative to its cross section, and that this lock (5) has a rotary mounting (8) on the handle (2) which is spaced from the hole for the treatment element, the axis (A) of the rotary mounting extending parallel to the longitudinal axis of the treatment element.

2. A teeth-cleaning device according to claim 1, **characterised in that** the recess (7) of the handle (2) to accommodate the lock (5) is provided on that side of the handle (2) which faces away from the protruding treatment element and is at least partly flattened, that this flattened portion (7a) can extend past the hole (6)and that the side (5a) of the strip-shaped lock (5) facing this flattened portion (7a) is also flat and level.

3. A teeth-cleaning device according to claim 1 or 2, **characterised in that** in the locked position the lock (5) clamps a portion or region of the treatment element.

4. A teeth-cleaning device according to any one of claims 1 to 3, **characterised in that**, in the operating position, the external side (5b) of the lock (5)remote from the hole (6) and the treatment element is aligned in height and width with the surface of the handle (2), and in the locked position the lock (5) complements the cross-section of the recess (7) of the handle (2).

5. A teeth-cleaning device according to any one of claims 1 to 4, **characterised in that** the hole (6) for accommodating and retaining the treatment element is closer to the end of the handle (2) than the rotary mounting (8) of the lock (5).

6. A teeth-cleaning device according to any one of claims 1 to 5, **characterised in that** the lock (5) has two arms or sections extending in opposite directions from the rotary mounting (8), one of which overlaps the hole (6) in the locked position, while the other extends from the rotary mounting (8) in the direction of the handle (2) up to a shoulder (9) bounding the recess (7).

7. A teeth-cleaning device according to any one of claims 1 to 6, **characterised in that** the shoulder (9) between the handle (2) and the recess is provided approximately perpendicularly to the longitudinal extension and has particularly a concave curvature in the transverse direction and **in that** the face (10) of the lock (5) facing this shoulder (9) in the locked position has a corresponding convex curvature, the radius of the curvature corresponding to the spacing of this face (10) from the axis (A) of the rotary mounting (8).

8. A teeth-cleaning device according to any one of claims 1 to 7, **characterised in that** the shoulder (9) and the face (10) are in contact in the locked position, possibly in clamped or engaging contact.

9. A teeth-cleaning device according to any one of claims 1 to 8, **characterised in that** a device for securing the locked position by means of a frictional or clamping force and/or engagement is provided at least on one end face of the lock.

10. A teeth-cleaning device according to claim 9, **characterised in that** a protrusion is provided on the end face (11) of the lock (5) remote from the recess (7), for clamping and/or engaging the lock (5) in the locked position.

11. A teeth-cleaning device according to claim 9 or 10, **characterised in that** the protrusion (12) is provided on the end face (11) of the lock (5) itself and it overlaps and/or surrounds the edge of end face of the handle (2) in the locked position, in particular by frictional locking or by engaging on the end of the handle.

12. A teeth-cleaning device according to any one of claims 1 to, 11, **characterised in that** retaining means are provided on the end face (10) of the lock (5) which faces the shoulder (9) and/or on this shoulder (9) for detachable securing of the locked position, in particular by clamping and/or engagement.

13. A teeth-cleaning device according to any one of claims 1 to 12, **characterised in that** as rotary mounting a mushroom-shaped protrusion (15) is provided on one part and on the counterpart is provided a recess (17) which engages with this mushroom-shaped protrusion (15) and surrounds the mushroom head with a collar (16) or a protrusion, the mushroom-shaped protrusion (15) being provided especially on the lock (5) and the recess (17) on the handle (2).

14. A teeth-cleaning device with a replaceable hard brush (4), the bristles (4b) of which are held by a central retaining wire (4a), according to any one of the preceding claims, **characterised in that** the retaining wire (4a) passes through the hole (6) in the handle (2) and protrudes past the hole (6) into the reach of the rotating lock (5) and can be bent over relative to the hole (6) by turning the lock (5) into its closed position.

15. A teeth-cleaning device according to claim 14, **characterised in that** on that side (7a) of the recess (7) facing the lock (5) there is a groove (8)for accommodating the retaining wire (4a) bent over by the lock (5), said groove extending transversely to the longitudinal extension of the handle (2) and its axis of curvature coinciding with the axis (A) of the rotary mounting (8), and **in that** the hole (6) through which the retaining wire (4a) may pass opens into this groove (8), especially at the base thereof.

16. A teeth-cleaning device with a fine brush-shaped treatment element (3), which consists of a bundle of substantially parallel bristles (3a), which is joined by welding and/or by a retaining plate (3b) at the end opposite the treatment end, according to any one of the preceding claims, **characterised in that** the radial expansion of the retaining plate (3b) overlaps the cross-section of the bundle of bristles or of the soft brush (3) and the bundle of bristles is inserted through a hole (6) accommodating the retaining plate (3b) in an interlocking engagement, while in its entry region remote from the point of emergence of the bristles (3a), the hole (6) has a widened portion (19) which corresponds to the shape and size of the retaining plate (3b) and the retaining plate (3b) is approximately flush with the edge of the hole (6) or of the widened portion (19), and **in that** in the locked position the lock (5) abuts against or is close to the surface (20) of the retaining plate (3b), particularly with pressure.

17. A teeth-cleaning device according to claim 16, **characterised in that** the retaining plate (3b) has an approximately oval, circular or polygonal outline or external contour and a hemi-spherical, plate-shaped and, in particular, tapering longitudinal section, which fits the correspondingly shaped widening (19) of the retaining hole (6) of the handle (2) and is held therein in the axial direction.

18. A teeth-cleaning device according to any one of the preceding claims, **characterised in that** the handle (2) has treatment elements in at least two places, particularly two different treatment elements, in particular at the opposite end regions, each of which is detachably and replaceably held in the operating position by a rotating lock (5).

19. A teeth-cleaning device according to any one of claims 1 to 18, **characterised in that** the two treatment elements protrude on the opposite ends of the shaft or handle (2) on opposite sides relative to the shaft or the handle (2).

20. A teeth-cleaning device according to any one of claims 1 to 19, **characterised in that** a fine brush (3), particularly a pointed brush, formed from a bundle of bristles is provided at one end and a hard brush (4) with a retaining wire (4a) and bristles (4b) protruding from it is provided at the other end.

21. A teeth-cleaning device according to any one of the preceding claims, **characterised in that** the hole (6) is divided along its length for at least one treatment element in such a manner that one portion of the internal wall of the hole (6) is located on the handle (2) and the portion of the internal wall complementing it in the operating position is located on the lock (5) or on an arm (21) of this lock extending substantially parallel to the axis of rotation (A) of the lock (5) and that when the lock (5) is open, for the purpose of inserting the treatment element or a retaining device associated with it, the hole (6) is divided and exposed and after pivoting or rotating the lock (5) into the locked position it surrounds the treatment element or the retaining device of a treatment element.

22. A teeth-cleaning device according to claim 21, **characterised in that** the divided hole (6) has a widened portion (19) or a bore (22) extending particularly in the direction of the rotary mounting (8) of the lock (5) or a groove which can be closed off by the lock (5) to accommodate a retaining wire (4a) bent over in this region.

23. A teeth-cleaning device according to claim 21 or 22, **characterised in that** the lock (5) has two substantially strip-shaped parts (23,24) extending parallel to each other, which are rotatably mounted on parallel flattened portions (7a) of recesses (7) in the handle (2), **in that** the region or arm (21) of the lock 5) comprising a portion of the hole (6) joins the two strip-shaped portions (23,24) together and that the lock (5) as a whole is substantially U-shaped in longitudinal section, the two strip-shaped portions (23,24) forming the legs of the U and containing the rotary mounting (8).

24. A teeth-cleaning device according to any one of claims 21 to 23, **characterised in that** that part of the hole (6) which is part of the handle (2) is arranged on the end face of the handle (2) in such a manner that when the lock (5) is closed the centre of the hole is in a central longitudinal plane which also passes through the rotary mounting (8) of the lock (5).

25. A teeth-cleaning device with a soft brush-shaped treatment element according to any one of claims 16 or 21 to 24, **characterised in that** the separating plane of the hole (6) to accommodate the soft brush (3) corresponds to the central longitudinal plane through the rotary mounting (8) and the closed hole (6).

26. A teeth-cleaning device with a replaceable hard brush (4) and with a central retaining wire (4a) according to any one of claims 21 to 24 or 14, **characterised in that** the part of the hole (6) disposed on the end face of the handle (2) extends on both sides of the central longitudinal plane and is open on the face facing away from this and extends over more than half the cross-section of the hole and **in that** the part of the hole which is situated in the lock (5) is open over its length in the direction of rotation and also extends over more than half the cross-section of the hole.

27. A teeth-cleaning device according to any one of claims 1 to 26, **characterised in that** in the region of its end face the handle (2) protrudes past that portion of the hole (6) located thereon and this protruding part (25) forms a stop for the rotating lock (5) in its closed position.

28. A teeth-cleaning device according to claim 27, **characterised in that** in the locked position the lock (5) overlaps the protruding part (25) of the handle (2) which acts as a stop on the end face and in this region of overlap it has, in particular, guide means, engaging means, detachable clamping means or similar retaining means.

29. A teeth-cleaning device according to any one of the preceding claims, **characterised in that** in the closed position the lock (5) has a detachable clip-in connection with a contact position of the handle.

## Revendications

1. Ustensile pour nettoyer les dents (1) comprenant un manche (2) et au moins un élément de traitement interdentaire (3, 4) ayant la forme par exemple d'un pinceau et/ou d'une brosse (4) et/ou d'un cure-dent, lequel élément de traitement fait saillie du manche (2) perpendiculairement à son étendue longitudinale, est fixé de manière amovible et interchangeable et est verrouillé en position d'utilisation au moyen d'un dispositif de blocage (5) pouvant être immobilisé en position de blocage, sachant que l'élément de traitement ou un dispositif de fixation qui lui est associé traverse, en position d'utilisation une perforation (6) s'étendant perpendiculairement au manche (2) et que l'élément de traitement (3, 4) ou son dispositif de fixation, lorsque le dispositif de blocage (5) est ouvert et libère la section transversale de la perforation, peut être enfoncé dans la perforation (6) et sachant qu'en outre le dispositif de blocage (5) en position de fermeture recouvre la perforation (6) et empêche le retrait de l'élément de traitement, **caractérisé en ce que** le dispositif de blocage (5) est réalisé en forme de barrette et est disposé dans un évidement (7) ou sur un rétrécissement de la section transversale du manche (2) de manière à ce qu'en position de blocage et d'utilisation, il fasse, du point de vue de sa section transversale, partie intégrante affleurante ou non saillante du manche (2), et **en ce que** ce dispositif de blocage (5) comporte un palier de rotation (8) disposé sur le manche (2) à distance de la perforation pour l'élément de traitement, palier dont l'axe (A) s'étend parallèlement à l'axe longitudinal de l'élément de traitement.

2. Ustensile pour nettoyer les dents selon la revendication 1, **caractérisé en ce que** l'évidemment (7) du manche (2) destiné à recevoir le dispositif de blocage (5) est disposé sur le côté du manche (2) qui est opposé à l'élément de traitement précité et est au moins en partie aplati, **en ce que** cet aplatissement (7a) s'étend jusqu'au-delà de la perforation (6) et **en ce que** le côté (5a) du dispositif de blocage (5) en forme de barrette qui est tourné vers cet aplatissement (7a) est également réalisé aplati et plan.

3. Ustensile pour nettoyer les dents selon la revendication 1 ou 2, **caractérisé en ce que** le dispositif de blocage (5) en position de blocage sollicite une partie ou une zone de l'élément de traitement en l'immobilisant.

4. Ustensile pour nettoyer les dents selon l'une des revendications 1 à 3, **caractérisé en ce que** le côté extérieur (5b) du dispositif de blocage (5) qui est opposé à la perforation (6) et à l'élément de traitement est en alignement, en position d'utilisation, du point de vue de la hauteur et de la largeur, avec la surface du manche (2) et **en ce que** le dispositif de blocage (5) dans sa position de blocage complète dans l'évidement (7) la section transversale du manche (2).

5. Ustensile pour nettoyer les dents selon l'une des revendications 1 à 4, **caractérisé en ce que** la perforation (6) destinée à recevoir et à fixer l'élément de traitement est située plus près de l'extrémité du manche (2) que le palier de rotation (8) du dispositif de blocage (5).

6. Ustensile pour nettoyer les dents selon l'une des revendications 1 à 5, **caractérisé en ce que** le dispositif de blocage (5) présente deux bras partant de son palier de rotation (8) dans des sens opposés, dont l'un recouvre la perforation (6) en position de blocage et dont l'autre s'étend du palier de rotation (8) en direction du manche (2), jusqu'à un décrochement (9) délimitant l'évidement (7).

7. Ustensile pour nettoyer les dents selon l'une des revendications 1 à 6, **caractérisé en ce que** le décrochement (9) entre le manche (2) et l'évidement est disposé approximativement perpendiculairement à la direction de l'étendue longitudinale et est courbé, notamment de façon concave, dans la direction transversale, et **en ce que** la face frontale (10) du dispositif de blocage (5) qui est tournée vers ce décrochement (9) est convexe, de manière correspondante sachant que le rayon de courbure correspond à l'écart entre cette face frontale (10) et l'axe (A) du palier de rotation (8).

8. Ustensile pour nettoyer les dents selon l'une des revendications 1 à 7, **caractérisé en ce que** le décrochement (9) et la face frontale (10) se touchent en position de blocage, le cas échéant en étant serrés ou enclenchés.

9. Ustensile pour nettoyer les dents selon l'une des revendications 1 à 8, **caractérisé en ce que** sur au moins l'une des faces frontales du dispositif de blocage est prévu un dispositif pour fixer la position de blocage par frottement, serrage et/ou enclenchement.

10. Ustensile pour nettoyer les dents selon la revendication 9, **caractérisé en ce que** sur la face frontale (11) du dispositif de blocage (5) qui est opposée au décrochement (9) est disposée une saillie pour immobiliser le dispositif de blocage (5) en position de blocage par serrage ou par enclenchement.

11. Ustensile pour nettoyer les dents selon la revendication 9 ou 10, **caractérisé en ce que** la saillie (12) est prévue sur la face frontale (11) du dispositif de blocage (5) même et, en position de blocage, est enclenchée par-dessus et/ou enserre l'extrémité frontale du manche (2), notamment est appliquée par frottement ou par enclenchement contre l'extrémité du manche.

12. Ustensile pour nettoyer les dents selon l'une des revendications 1 à 11, **caractérisé en ce que** sur la face frontale (10) du dispositif de blocage (5) qui est tournée vers le décrochement (9) et/ou sur ce décrochement (9) est prévu un moyen de fixation pour immobiliser de façon amovible la position de blocage, notamment un dispositif de serrage et/ou un dispositif à enclenchement.

13. Ustensile pour nettoyer les dents selon l'une des revendications 1 à 12, **caractérisé en ce que** sont prévus en tant que palier de rotation, d'un côté, une saillie en forme de champignon (15) et, sur le pendant, un évidement (17) enclenché sur cette saillie en forme de champignon (15) et retenant la tête du champignon avec un collet (16) ou une saillie, sachant que la saillie en forme de champignon (15) est notamment prévue sur le dispositif de blocage (5) et l'évidement (17) sur le manche (2).

14. Ustensile pour nettoyer les dents comportant une brosse interchangeable (4) dont les poils (4b) sont maintenus par un fil de fixation central (4a), selon l'une des revendications précédentes, **caractérisé en ce que** le fil de fixation (4a) traverse la perforation (6) du manche (2) et dépasse de la perforation (6) pour s'étendre jusque dans la zone du dispositif de blocage tournant (5), et peut être recourbé dans sa position de fermeture par rapport à la perforation (6) en faisant tourner le dispositif de blocage (5).

15. Ustensile pour nettoyer les dents selon la revendication 14, **caractérisé en ce que** l'évidement (7) présente sur son côté (7a) tourné vers le dispositif de blocage (5) une rainure (18) s'étendant transversalement par rapport à l'étendue longitudinale du manche (2) ― notamment courbée en ayant pour centre de courbure l'axe (A) du palier de rotation (8) ― qui est destinée à recevoir le fil de fixation (4a) recourbé par le dispositif de blocage (5), et **en ce que** la perforation (6) à travers laquelle passe le fil de fixation (4a) débouche dans cette rainure (18), notamment au niveau de son fond.

16. Ustensile pour nettoyer les dents comportant un élément de traitement en forme de pinceau (3) qui est formé par une touffe de poils composée de poils approximativement parallèles (3a), laquelle est notamment soudée et/ou reliée à une plaquette de fixation (3b) par son extrémité opposée à l'extrémité de traitement, selon l'une des revendications précédentes, **caractérisé en ce que** l'étendue radiale de la plaquette de fixation (3b) est supérieure à la section transversale de la touffe de poils ou du pinceau (3) et **en ce que** la touffe de poils est enfoncée dans une perforation (6) recevant la plaquette de fixation (3b) par engagement positif, sachant que la perforation (6) comporte dans sa zone d'entrée opposée à la sortie des poils (3a) un élargissement (19) correspondant à la forme et à la taille de la plaquette de fixation (3b), et que la plaquette de fixation (3b) est approximativement en affleurement avec le bord de la perforation (6) ou de l'élargissement (19), et **en ce que** le dispositif de blocage (5) en position de fermeture est appliqué, notamment avec pression, ou presque appliqué contre la surface (20) de la plaquette de fixation (3b).

17. Ustensile pour nettoyer les dents selon la revendication 16, **caractérisé en ce que** la plaquette de fixation (3b) possède un pourtour ou un contour approximativement ovale, circulaire ou polygonal et une section longitudinale hémisphérique, en forme de plaque et notamment se rétrécissant, qui va parfaitement dans l'élargissement (19) formé en conséquence de la perforation de fixation (6) du manche (2) et qui y est immobilisée dans la direction axiale.

18. Ustensile pour nettoyer les dents selon l'une des revendications précédentes, **caractérisé en ce que** le manche (2) présente en au moins deux endroits, notamment dans les zones d'extrémité opposées, un élément de traitement, notamment deux éléments de traitement différents, qui sont chacun maintenus de façon amovible et interchangeable en position d'utilisation par un dispositif de blocage (5) tournant.

19. Ustensile pour nettoyer les dents selon l'une des revendications 1 à 18, **caractérisé en ce que** les deux éléments de traitement aux extrémités opposées du manche (2) font saillie du manche (2) vers des côtés opposés.

20. Ustensile pour nettoyer les dents selon l'une des revendications 1 à 19, **caractérisé en ce que** sont prévus à l'une des extrémités un pinceau (3) notamment pointu formé par une touffe de poils, et à l'autre extrémité une brosse (4) avec un fil de fixation (4a) et des poils (4b) qui en font saillie.

21. Ustensile pour nettoyer les dents selon l'une des revendications précédentes, **caractérisé en ce que** la perforation (6) pour au moins un élément de traitement est divisée dans le sens de la longueur de manière à ce qu'une partie de la paroi intérieure de la perforation (6) soit disposée sur le manche (2) et la partie de la paroi intérieure qui complète la précédente en position d'utilisation soit située sur le dispositif de blocage (5) ou sur une aile (21) de ce dispositif de blocage qui s'étend approximativement parallèlement à l'axe de rotation (A) du dispositif de blocage (5), et **en ce que**, lorsque le dispositif de blocage (5) est ouvert, la perforation (6) est divisée et libérée pour permettre l'introduction de l'élément de traitement ou un support qui lui est associé et, après que le dispositif de blocage(5) a pivoté ou tourné en position de fermeture, la perforation entoure l'élément de traitement ou le support d'un élément de traitement.

22. Ustensile pour nettoyer les dents selon la revendication 21, **caractérisé en ce que** la perforation (6) divisée présente un élargissement (19) ou un perçage (22) s'étendant notamment vers le palier de rotation (8) du dispositif de blocage (5) ou une rainure pouvant être fermée par le dispositif de blocage (5) pour recevoir un fil de fixation (4a) recourbé dans cette zone.

23. Ustensile pour nettoyer les dents selon la revendication 21 ou 22, **caractérisé en ce que** le dispositif de blocage (5) présente deux éléments (23, 24) approximativement en forme de barrette et parallèles entre eux, qui sont montés de façon rotative sur des aplatissements parallèles (7a) d'évidements (7) du manche (2), **en ce que** la zone ou l'aile (21) du dispositif de blocage (5) qui présente une partie de la perforation (6) relie les deux éléments en forme de barrette (23, 24), et **en ce que** le dispositif de blocage (5) dans sa totalité présente une section longitudinale approximativement en forme de U, sachant que les deux éléments en forme de barrette (23, 24) forment les ailes de l'U et présentent le palier de rotation (8).

24. Ustensile pour nettoyer les dents selon l'une des revendications 21 à 23, **caractérisé en ce que** la partie de la perforation (6) qui fait partie du manche (2) est disposée sur la face frontale du manche (2) de manière à ce que, lorsque le dispositif de blocage (5) est fermé, le milieu de la perforation se trouve dans un plan médian longitudinal passant également par le palier de rotation (8) du dispositif de blocage (5).

25. Ustensile pour nettoyer les dents comportant un élément de traitement en forme de pinceau selon l'une des revendications 16 ou 21 à 24, **caractérisé en ce que** le plan de séparation de la perforation (6) destinée à recevoir le pinceau (3) correspond au plan médian longitudinal passant par le palier de rotation (8) et par la perforation fermée (6).

26. Ustensile pour nettoyer les dents comportant une brosse interchangeable (4) et un fil de fixation central (4a) selon l'une des revendications 21 à 24 ou 14, **caractérisé en ce que** la partie de la perforation (6) située sur la face frontale du manche (2) s'étend de part et d'autre du plan médian longitudinal, est ouverte sur la face frontale de celui-ci en indiquant la direction d'introduction et s'étend sur plus de la moitié de la section transversale de la perforation, et **en ce que** la partie de la perforation qui se situe sur le dispositif de blocage (5) est ouverte sur sa longueur dans le sens de rotation et s'étend également sur plus de la moitié de la section transversale de la perforation.

27. Ustensile pour nettoyer les dents selon l'une des revendications 1 à 26, **caractérisé en ce que** le manche (2) dépasse dans la zone de sa face frontale de la partie de la perforation (6) qui se trouve sur lui, et **en ce que** cette avancée (25) forme une butée pour le dispositif de blocage rotatif (5) en position de fermeture.

28. Ustensile pour nettoyer les dents selon la revendication 27, **caractérisé en ce que** le dispositif de blocage (5) en position de fermeture passe par-dessus l'avancée (25) du manche (2) servant de butée au niveau de la face frontale et présente dans cette zone de chevauchement notamment un guide, un cran, une liaison par serrage amovible ou un dispositif de fixation analogue.

29. Ustensile pour nettoyer les dents selon l'une des revendications précédentes, **caractérisé en ce que** le dispositif de blocage (5) en position de fermeture présente, avec un point de contact du manche, une liaison par enclenchement amovible.
